# EUROPÄISCHE PATENTSCHRIFT

(11) **EP 3 135 382 B1**
(45) Veröffentlichungstag und Bekanntmachung des Hinweises auf die Patenterteilung: **05.06.2019**
(21) Anmeldenummer: 16182399.2
(22) Anmeldetag: 02.08.2016
(51) Int. Cl.: B04B 7/18

(54) **ZENTRIFUGENTROMMEL**
CENTRIFUGE DRUM
TAMBOUR CENTRIFUGE

(30) Priorität: 26.08.2015 EP 15182585
(43) Veröffentlichungstag der Anmeldung: 01.03.2017
(73) Patentinhaber: Ferrum AG, 5102 Rupperswil (CH)
(72) Erfinder: Scalzo, Giuseppe, 5102 Rupperswil (CH); Tschabold, Tobias, 4133 Pratteln (CH); Kostrewa, Emil, 5103 Möriken (CH)
(74) Vertreter: Intellectual Property Services GmbH

(56) Entgegenhaltungen:
- CN-U- 202 962 681
- DE-C- 635 916
- JP-U- S56 172 347

## Beschreibung

Die Erfindung betrifft eine Zentrifugentrommel gemäss dem Oberbegriff des unabhängigen Anspruchs 1.

Zur Trocknung feuchter Substanzen oder feuchter Substanzgemische sind Zentrifugen in den verschiedensten Ausführungsformen weit verbreitet und werden auf den verschiedensten Gebieten eingesetzt. So kommen beispielsweise zur Trocknung hochreiner pharmazeutischer Produkte diskontinuierlich arbeitende Zentrifugen, wie Schälzentrifugen, bevorzugt zum Einsatz, bei welchem nach erfolgter Trennung eines Gemischs in einen Feststoffkuchen und eine Flüssigphase der Feststoffkuchen mittels einer Schäleinrichtung von der Trommelwand abgeschält und über geeignete Einrichtungen, z.B. über eine Rutsche, nach aussen aus der Trommel ausgetragen wird. Bei anderen diskontinuierlichen Systemen, bevorzugt aber nicht nur bei Zentrifugen im Labormassstab, kann es sein, das keine automatische Schälvorrichtung vorgesehen ist, sondern die Zentrifuge nach erfolgter Trennung des Gemischs angehalten wird und der abgelagerte Feststoffkuchen manuell aus der Trommel entfernt wird.

Insbesondere dann, wenn kontinuierlich grosse Mengen eines fest-flüssig Gemischs getrennt werden sollen, werden kontinuierlich arbeitende Schubzentrifugen vorteilhaft eingesetzt. Dabei kommen je nach Anforderung ein- oder mehrstufige Schubzentrifugen, sowie sogenannte Doppelschubzentrifugen zum Einsatz.

Alle diese Zentrifugentypen sind dem Fachmann seit langem wohl bekannt und sind z.B. in dem Standartwerk "Industrie-Zentrifugen", von Prof. W. Stahl, DrM PRESS, ausführlich beschrieben.

Die Zentrifugentrommel selbst ist dabei in der Regel als hohlzylinderförmiger Korb ausgestaltet, der in seiner Umfangsfläche eine Vielzahl von Ablauföffnungen hat, durch die die abzentrifugierte Flüssigphase aus der Zentrifugentrommel nach aussen abgeführt wird. D.h., die Trommel von Filterzentrifugen ist in regelmässigen Mustern, z.B. in Abständen von einigen Zentimetern gebohrt, um das Filtrat, also die Flüssigphase, durch den Trommelmantel zu entlassen.

Dabei ist die innere Umfangsfläche der Zentrifugentrommel häufig mit einem zusätzlichen Filtermedium, z.B. einem Filtertuch ausgekleidet, auf die der Feststoffkuchen während des Zentrifugiervorgangs absedimentiert wird.

Das Filtermedium leitet dabei durch seine Sperrwirkung gegenüber dem anströmenden Feststoff in der Suspension die Kuchenbildung ein. Dabei ist besonders darauf zu achten, dass das Filtermedium sowohl gegen eventuelle Umfangsverschiebungen gesichert ist, da z.B. beim Füllvorgang oder beim Schälen tangentiale Beschleunigungs- oder Schnittkräfte auftreten können, als auch eine Sicherung gegen axiale Verschiebungen vorgesehen ist, so dass das Filtertuch auch gegen Verschiebungen entlang der Drehachse der Zentrifugentrommel zuverlässig gesichert ist.

Um dies zu gewährleisten sind im Stand der Technik zahlreiche Lösungen bekannt, die man ebenfalls in dem zuvor zitierten Werk von Prof. Stahl aufgelistet und beschrieben findet,
So wird z.B. bei Schälzentrifugen das Filtertuch als Meterware auf ein Stützgewebe verlegt und wurde in zwei Teilen mit halbem Umfang und jeweiliger Überlappung so verlegt, dass die einlaufende Suspension nicht zwischen die beiden Tuchhälften gelangen kann, also das oben liegende Tuch gegen die Laufrichtung zeigt.

Ein Nachteil dieser Lösung besteht vor allem darin, dass durch das Überlappen ein doppelter Filtertuchwiderstand entsteht, was an diesen Überlappungsstellen zu einer verminderten Kuchendicke führen kann. Ebenso wird die Entfeuchtung an diesen Stellen verschlechtert. Ausserdem ist eine symmetrische Ausführung der Überlappung notwendig, um einer Unwuchtbildung an der Stossstelle vorzubeugen.

Eine wesentliche Verbesserung gegenüber den überlappenden Tüchern stellen die endlos konfektionierten Filtertücher in Zylinderform dar, die zusätzlich einen gewissen Komfort, d.h. insbesondere eine Vereinfachung beim Ein- bzw. Ausbau bieten. Ausserdem entschärfen sie wesentlich die Probleme der überlappenden Filtertücher, vor allem bei kritischen Filtrationen.

Solche zylinderförmigen, aber auch offene Filtertücher werden bisher an beiden Enden der Trommel in einer Rille oder Nut fixiert, die z.B. nach dem Herstellen der Trommel in Umfangsrichtung umlaufend in den Trommelmantel eingefräst werden.

Das Filtermedium, also z.B. das Filtertuch, wird dabei nahe der Vorder- und Rückseite der Zentrifugentrommel in die z.B. schwalbenschwanzartigen zuvor erwähnten umlaufenden Rillen oder Nuten eingeschlagen, und der freie Überstand des Filtertuchs wird danach einfach abgeschnitten. Zur Befestigung wird das Filtertuch z.B. mittels einer Kordel aus feinen Chromnickelstählen oder einer Rundschnur aus Gummi mit einem Kreisvollquerschnitt in die Rille oder Nute eingespannt.

Aus unterschiedlichen Gründen ist diese Befestigungsart unbefriedigend. Die Schwalbenschwanznut an den Übergangsstellen in die vordere Kreisringscheibe, bzw. in die hintere Vollscheibe der Trommel ist festigkeitstechnisch äusserst ungünstig. Der Tuchwechsel erfordert erfahrenes Personal, insbesondere um bei Einstemmen das Tuch nicht zu beschädigen und die Stillstandszeiten während des Tuchwechsels sind unvertretbar lang.

Eine gewisse Verbesserung bringen aufblasbare Dichtungen, die anstelle der einzustemmenden Kordel oder Rundschnüre verwendet werden und einen schnellen Ein- und Ausbau des Filtermediums erlauben. Die Trommel ist dabei an beiden Stirnseiten mit einer schwalbenförmigen Eindrehung versehen, in die die aufblasbaren Dichtringe eingelassen sind.

Eine andere bekannte Methode ist die Befestigung des Filtertuchs mittels eines Schnellspannrings in einer Rille oder Nut.

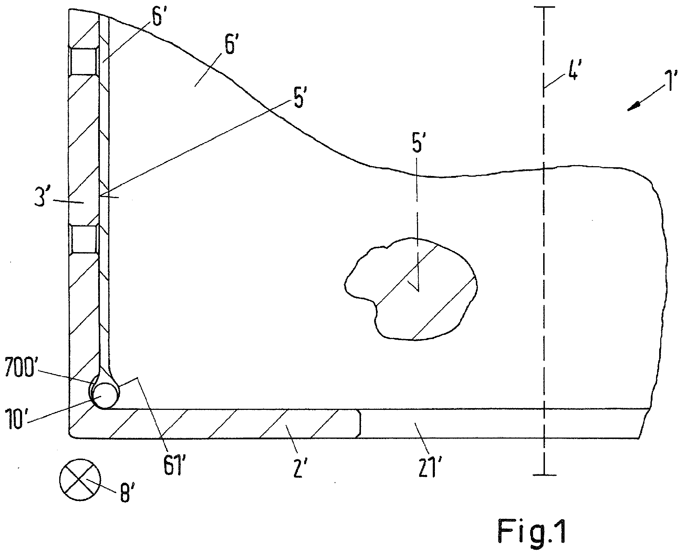

Zur Erläuterung dieser Befestigungsart wird im Folgenden auf die schematischen Fig. 1 bis Fig. 3d Bezug genommen, anhand derer der zuvor beschriebene Stand der Technik etwas näher beschrieben wird. Zur Unterscheidung des Stands der Technik von der vorliegenden Erfindung sind die Bezugszeichen, die sich auf Merkmale von bekannten Ausführungsbeispielen beziehen mit einem Hochkomma versehen, während Merkmale erfindungsgemässer Ausführungsbeispiele mit Bezugszeichen versehen sind, die kein Hochkomma tragen.

In Fig. 1 ist beispielhaft eine aus dem Stand der Technik bekannte Zentrifugentrommel 1' schematisch dargestellt, bei welcher ein Filtertuch 6' in einer in Umfangsrichtung 8' in die Zentrifugentrommel 1' eingefräste Fuge 700' mittels eines Schnellspannrings 10' befestigt ist. Die Zentrifugentrommel 1' umfasst in wohlbekannter Weise einen die Zentrifugentrommel 1' bildenden Trommelmantel 3' und einen Trommeldeckel 2', durch den z.B. durch die Öffnung 21' eine zu entfeuchtende Suspension eingebracht werden kann. Des Weiteren wird die bekannte Zentrifugentrommel 1'durch einen aus Gründen der Übersichtlichkeit in Fig. 1 nicht dargestellten Trommelboden 200'gebildet, der zum Antrieb der Zentrifugentrommel 1'mit einem ebenfalls nicht dargestellten Drehantrieb gekoppelt ist. Der Trommelmantel 3' erstreckt sich zylinderförmig entlang der Längsachse 4' der Zentrifugentrommel 1' und der Trommeldeckel 2' und der Trommelboden 200' sind senkrecht zur Längsachse 4' diametral gegenüberliegend am Trommelmantel 3' angeordnet und bilden so die beiden Endflächen der zylindrischen Zentrifugentrommel 1'.

An einer inneren Umfangsfläche 5' der Zentrifugentrommel 1' ist ein Filtermedium 6', im vorliegenden Fall ein Textilfiltertuch 6' vorgesehen, wobei zur Fixierung des Textilfiltertuchs 6' an der inneren Umfangsfläche 5' der Zentrifugentrommel 1' eine Nut 700' vorgesehen ist, in der das Filtertuch 6' mittels des Spannrings 10' fixiert ist.

Dazu ist, bezogen auf die axiale Längsrichtung 4', an beiden Enden des Filtertuchs 6' in Umfangsrichtung ein umlaufender Hohlsaum 61' vorgesehen, in den der Spannring 10' vor der Montage des Filtertuchs 6' in der Zentrifugentrommel 1' eingeführt wird.

Sodann wird das Filtertuch 6' auf der inneren Umfangsfläche 5' der Zentrifugentrommel 1' platziert, der Hohlsaum 61' mit Spannring 10' in die Nut 700' eingelegt und der Spannring 10' z.B. mittels einer Schnellspannvorrichtung gespannt, so dass das Filtertuch 6' sicher in der Zentrifugentrommel 1' fixiert ist.

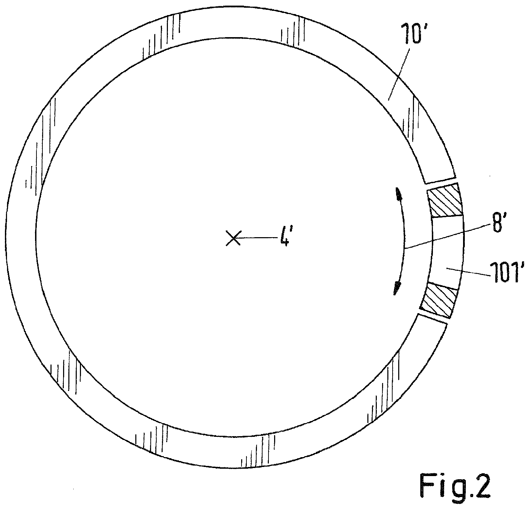

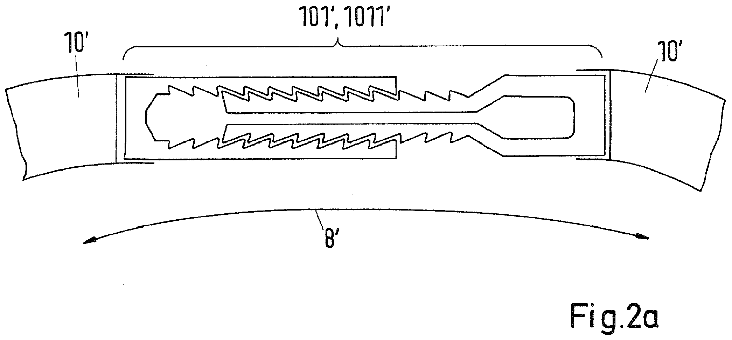

In Fig. 2 ist schematisch ein solcher Spannring 10' dargestellt, der im Einbauzustand konzentrisch zur axialen Richtung der Längsachse 4' der in Fig. 2 nicht dargestellten Zentrifugentrommel 1' liegt. Der Spannring 10' verfügt bevorzugt über eine Schnellspannvorrichtung 101', die es z.B. über einen bekannten Gewindemechanismus gestattet, den Umfang des Spannringsrings 10' in der Nut 700' zu vergrössern, dadurch den Spannring 10' in der Nut 700' zu verklemmen, wodurch das Filtertuch 6' in der Zentrifugentrommel 1' sicher fixiert wird.

Dabei sind eine ganze Reihe von Schnellspannvorrichtungen 101' in verschiedensten Ausführungsformen bekannt, die je nach Zweckmässigkeit verwendet werden können.

Besonders einfach zu bedienen sind z.B. Schnellspannvorrichtungen 101', die über eine Ratsche 1011' verfügen, bei welcher z.B. zwei gezackte Flächen ineinander greifen, die gegeneinander derart verschoben werden können, dass der Umfang des Spannrings 10' vergrösserbar ist, und sich dabei die beiden gezackten Flächen ineinander verhacken, so dass der grössere Umfang, bzw. die dadurch in der Nut 700' erzeugte Spann- bzw. Anpresskraft, automatisch aufrecht erhalten wird. Solche Schnellspannvorrichtungen 101' sind auch auf anderen Gebieten der Technik wohl bekannt. Zur Illustration ist in Fig. 2a schematisch eine spezielles Ausführungsbeispiel einer solchen Schnellspannvorrichtung 101' dargestellt.

Dabei können im Stand der Technik auch verschiedene Ausführungsformen von in Umfangsrichtung 8' verlaufende Nuten 700' unterschieden werden, die je nach Anforderung oder je nach konkreter Art der Befestigung des Filtertuchs 6' unterschiedlich ausgeführt, bzw. an unterschiedlichen Bereichen in der Zentrifugentrommel 1' vorgesehen sein können.

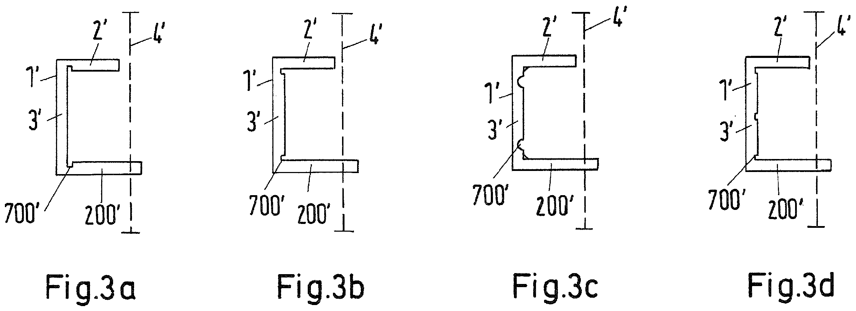

In den Fig. 3a bis Fig. 3d ist schematisch eine Auswahl verschiedener bekannter Fugentypen 700' dargestellt.

Die Fig. 3a und Fig. 3b zeigen Nuten 700', die bei Fig. 3a im Trommeldeckel 2' bzw. im Trommelboden 200' vorgesehen sind, und im Beispiel der Fig. 3b in der inneren Umfangsfläche 5' des Trommelmantels 3' eingefräst sind. Die Nutenkonfigurationen gemäss Fig. 3a und Fig. 3b kommen dabei bevorzugt dann zum Einsatz, wenn das Filtertuch 6' mittels eines Kordels oder einer Rundschnur wie weiter oben beschrieben in der Nut eingepresst wird.

Die Fig. 3c und Fig. 3d zeigen dagegen Nutenkonfigurationen mit Nuten 700', die bevorzugt dann gewählt werden, wenn z.B. eine der oben beschriebenen Spannringtechniken zur Fixierung des Filtertuchs 6' mittels eines Spannrings 10' in der Zentrifugentrommel 1' zur Anwendung kommt.

So unterschiedlich die zuvor beschriebenen Befestigungsmethoden und Befestigungseinrichtungen zur Befestigung eines Filtermediums in einer Zentrifugentrommel auch sein mögen, so verbindet sie jedoch alle ein gemeinsames Problem, das in der Verwendung einer Nut zur Befestigung des Filtermediums entsteht.

Die Verwendung einer Nut bringt nämlich eine ganze Reihe von Nachteilen mit sich, die je nach spezieller Anwendung mehr oder weniger gravierend sind.

Einer der bedeutendsten Nachteile liegt darin, dass nach dem Schweissen der Trommel als solches, also nach dem Zusammenschweissen von Trommelboden und Trommeldeckel mit dem Trommelmantel, die Nut zur Befestigung des Filtertuchs in den Trommeldeckel, und / oder den Trommelboden und / oder den Trommelmantel eingearbeitet, also z.B. eingefräst werden muss.

Das ist fertigungstechnisch nicht nur ein sehr grosser Aufwand, d.h. kompliziert und damit entsprechend teuer und unwirtschaftlich, sondern das Einfräsen und / oder Eindrehen einer solchen Nut schwächt natürlich vor allem die mechanische Stabilität der gesamten Trommel, da durch die Nuten aus dem Trommelkörper Material abgetragen wird, das zur Wahrung der Stabilität der Trommel nicht mehr zur Verfügung steht und / oder wodurch im schlimmsten Fall Sollbruchstellen definiert werden, die bei der Zentrifugentrommel unter bestimmten Betriebsbedingungen, in denen die Zentrifugentrommel stark belastet wird, zu Rissen oder gar Brüchen in der Zentrifugentrommel führen kann, d.h. es können mechanische Spannungen im Material der Trommel entstehen, und es kann sogar zu einem Materialverzug kommen, so dass die Rotationssymmetrie der Zentrifugentrommel stark gestört wird, was zu einem höheren Aufwand beim anschliessenden Balancieren führt.

Darüber hinaus kann es beim Einarbeiten der Nut in die Zentrifugentrommel dazu kommen, dass mechanische Spannungen im Material der Trommel entstehen oder es sogar zu einem Materialverzug kommt, so dass die Rotationssymmetrie der Zentrifugentrommel stark gestört wird, was zu Unwuchten im Betrieb führen kann, so dass eine solche Zentrifugentrommel durch das Einbringen der Nuten unbrauchbar wird.

Ein weiterer wesentlicher Nachteil tritt beim Verarbeiten hochreiner Produkte auf, bei denen höchste Hygienestandards eingehalten werden müssen (hygiene design), z.B. bei der Verarbeitung hochreiner pharmazeutischer Produkte, bei denen häufig, im schlimmsten Fall nach jeder verarbeiteten Charge, die Trommel gereinigt werden muss. Das korrekte Reinigen der Nut, in der das Filtertuch fixiert wird, ist dabei besonders problematisch, weil die Nuten für die Reinigung schlecht zugänglich sind, und je nach konkreter Geometrie überhaupt nicht vollständig mit dem erforderlichen Reinheitsgrad gereinigt werden können.

Um der oben beschriebenen Problematik einer Zentrifugentrommel mit einer Nut Rechnung zu tragen, wurde in der EP 1 935 499 A1 eine weitere Befestigungseinrichtung zur Befestigung eines Filtermediums in einer Zentrifugentrommel vorgeschlagen.

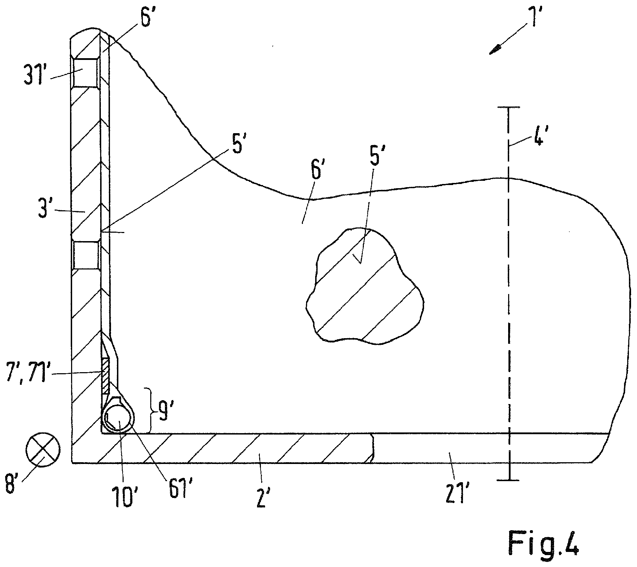

Zur Erläuterung dieser Befestigungseinrichtung wird im Folgenden auf die schematische Fig. 4 Bezug genommen. Die in Fig. 4 verwendeten Bezugszeichen tragen dabei ein Hochkomma, da auch diese sich auf den bekannten Stand der Technik beziehen.

Die Zentrifugentrommel 1' gemäss Fig. 4 umfasst in an sich bekannter Weise einen die Zentrifugentrommel 1' bildenden Trommelmantel 3' mit Ablauföffnungen 31', durch die abzentrifugierte Flüssigphase aus der Zentrifugentrommel 1' abführbar ist, und den Trommeldeckel 2', durch den z.B. durch die Öffnung 21' eine zu entfeuchtende Suspension einbringbar ist. Des Weiteren wird die Zentrifugentrommel 1' durch einen aus Gründen der Übersichtlichkeit nicht dargestellten Trommelboden gebildet, der mit einem ebenfalls nicht dargestellten Drehantrieb zum Antrieb der Zentrifugentrommel 1' gekoppelt ist.

Der Trommelmantel 3' erstreckt sich zylinderförmig entlang der Längsachse 4' der Zentrifugentrommel 1', und der Trommeldeckel 2' und der Trommelboden sind senkrecht zur Längsachse 4'diametral gegenüberliegend am Trommelmantel 3' angeordnet und bilden so die beiden Endflächen der zylindrischen Zentrifugentrommel 1'. An einer inneren Umfangsfläche 5' der Zentrifugentrommel 1' ist ein Filtermedium 6', im vorliegenden Fall ein Textilfiltertuch 6' vorgesehen und an beiden Enden der Zentrifugentrommel 1' mittels eines Spannrings 10' fixiert.

Dazu ist, in Bezug auf die axiale Längsrichtung 4' gesehen, an beiden Enden des Filtertuchs 6' in Umfangsrichtung 8' ein umlaufender Hohlsaum 61' vorgesehen, in den der Spannring 10' vor der Montage des Filtertuchs 6' in der Zentrifugentrommel 1' eingeführt wird.

Bei der Zentrifugentrommel 1' gemäss Fig. 4 ist zur Fixierung des Filtertuchs 6' an der inneren Umfangsfläche 5' der Zentrifugentrommel 1' eine Mehrzahl von Fixierstegen 7' vorgesehen, die in Umfangsrichtung 8' in gleichen Abständen angeordnet sind. Die radial in Richtung zur Längsachse 4' der Zentrifugentrommel 1' hervorstehenden Fixierstege 7', erstrecken sich entlang der Umfangsrichtung 8' in einem vorgebbaren Abstand zum Trommeldeckel 2', so dass zwischen Trommeldeckel 2' und Fixierstegen 7' zur Fixierung des Filtertuchs 6' ein in Umfangsrichtung 8' verlaufender zweiter ringförmiger Befestigungsraum 9' gebildet ist, in welchem das Filtertuch 6' mittels des Spannrings 10' befestigt ist.

Auf der dem Trommeldeckel 2' diametral gegenüberliegenden Seite befindet sich der in Fig. 4 nicht dargestellte Trommelboden, der mit einer Mehrzahl von Fixierstegen einen ersten Befestigungsraum bildet, in welchem das andere Ende des zylindrisch ausgebildeten Filtertuchs 6' ebenfalls mit einem Spannring 10' fixiert ist.

Das heisst, bei der Zentrifugentrommel 1' gemäss Fig. 4 sind in Bezug auf die axiale Richtung an beiden Enden der Zentrifugentrommel 1' Fixierstege 7' derart vorgesehen, dass z.B. ein Filtertuch 6' mit einem Spannring 10' in dem ersten Befestigungsraum bzw. zweiten Befestigungsraum 9' fixierbar ist.

In dem in Fig.4 gezeigten Ausführungsbeispiel der bekannten Fixiereinrichtung sind die Fixierstege 7' als Schweissbolzen 71' ausgebildet und mittels einer Schweisspistole direkt an den entsprechenden Stellen auf den Trommelmantel 3' der Zentrifugentrommel 1' aufgeschweisst. Die Schweissbolzen 71' werden nach dem Aufschweissen auf eine bestimmte Höhe flach geschliffen, so dass das Filtertuch 6' ohne Beschädigungen zu erleiden über die Schweissbolzen 71' gelegt werden kann und auch unter einer erhöhten Druckbelastung im Betriebszustand der Zentrifuge keinen Schaden nimmt.

Auch kann anstatt einzelner Fixierstege 7' ein in Umfangsrichtung 8' ununterbrochen umlaufender Blockiersteg angeordnet sein, der ebenfalls an die innere Umfangsfläche 5' der Zentrifugentrommel 1' aufgeschweisst ist.

Die Fixierstege 7' können auch Fixierbolzen sein, die am Trommelmantel 3' verschraubt oder vernietet sind. In diesem Fall wird die Anbringung der Fixierbolzen dadurch bewerkstelligt, dass an den entsprechenden Stellen, wo solche Fixierbolzen vorgesehen sind, Bohrungen in die Zentrifugentrommel 1' eingebracht werden, in die die Fixierbolzen dann in an sich bekannter Weise verschraubt, vernietet oder auch verschweisst werden.

Im Ausführungsbeispiel aus Fig.4 sind die Fixierstege 7' am Trommelmantel 3' angebracht. Auch ist es aber möglich, dass die Fixierstege 7' am Trommelmantel 3' und / oder am Trommelboden und / oder am Trommeldeckel 2' angebracht sind.

Zur Montage wird das Filtertuch 6' auf der inneren Umfangsfläche 5' der Zentrifugentrommel 1' platziert, der Hohlsaum 61' mit Spannring 10' in den ersten Befestigungsraum bzw. den zweiten Befestigungsraum 9' eingelegt und der Spannring 10' z.B. mittels einer Schnellspannvorrichtung, die an sich bekannt ist und weiter oben bereits erläutert wurde, fixiert.

Fig. 4 zeigt, dass durch die in der EP 1 935 499 A1 vorgeschlagene Befestigungseinrichtung auf eine Nut zur Befestigung des Filtertuchs 6' verzichtet werden kann, da die bekannte Funktion der Nut durch Zusammenwirken der Fixierstege 7', 71' mit einem benachbarten Trommeldeckel 2' und / oder dem Trommelboden und / oder dem Trommelmantel 3' ersetzt ist.

Durch die Anwendung der beschriebenen Befestigungseinrichtung konnte in der Praxis schon einiges verbessert werden.

Aufgrund der Tatsache, dass das Einarbeiten einer Nut zur Fixierung des Filtermediums, also z.B. eines Textilfiltertuchs, in den Trommeldeckel und/oder den Trommelboden und/oder den Trommelmantel entfällt, wurde die Herstellung der Zentrifugentrommel wesentlich vereinfacht und ist daher kostengünstiger als die Herstellung der anderen aus dem Stand der Technik bekannten Zentrifugentrommeln mit eingefräster Nut für die Fixierung des Filtermediums.

Zudem kann die in der EP 1 935 499 A1 vorgeschlagene Zentrifugentrommel viel einfacher und zuverlässiger gereinigt werden, was insbesondere bei der Verarbeitung hochempfindlicher und hochreiner Produkte, an die höchste Hygienestandards gestellt werden, wie zum Beispiel, aber nicht nur, bei der Verarbeitung hochreiner pharmazeutischer Produkte, eine entscheidende Rolle spielt.

Es hat sich aber auch gezeigt, dass selbst diese verbesserte und sich in der Praxis mittlerweile bewährte Befestigungseinrichtung noch Verbesserungspotential hat.

Ein wesentlicher Nachteil der Befestigungseinrichtung liegt darin, dass nach dem Schweissen der Trommel als solches, also nach dem Zusammenschweissen von Trommelboden und Trommeldeckel mit dem Trommelmantel, die Fixierstege nachträglich in den Trommelmantel, und / oder den Trommeldeckel und / oder den Trommelboden eingeschweisst, verschraubt, vernietet oder auf andere Weise in der Zentrifugentrommel eingebaut werden müssen.

Wie sich nun im Nachhinein herausgestellt hat, ist auch der Einbau der Fixierstege mit einem erheblichen fertigungstechnischen Aufwand verbunden, d.h auch die Anbringung der Fixierstege an der Trommel ist entgegen ursprünglicher Annahmen recht kompliziert und damit entsprechend teuer und unwirtschaftlich. Zudem wird auch durch das Schweissen und / oder Einbringen von zusätzlichen Bohrungen vor allem die mechanische Stabilität der gesamten Trommel nicht unerheblich geschwächt, da ähnlich wie beim Einfräsen einer Nut auch beim Schweissen und / oder Bohren Material aus dem Trommelkörper abgetragen wird, das zur Wahrung der Stabilität der Trommel bei den enorm hohen Rotationsgeschwindigkeiten nicht mehr zur Verfügung steht und / oder wodurch im schlimmsten Fall Sollbruchstellen definiert werden, die bei der Zentrifugentrommel unter bestimmten Betriebsbedingungen, in denen die Zentrifugentrommel stark belastet wird, zu Rissen oder gar Brüchen in der Zentrifugentrommel führen kann, d.h es können mechanische Spannungen im Material der Trommel entstehen, und es kann sogar zu einem Materialverzug kommen, so dass die Rotationssymmetrie der Zentrifugentrommel gestört wird, was zu einem höheren Aufwand beim anschliessenden Balancieren führt.

Darüber hinaus kann es auch beim Schweissen und / oder Einbringen der Bohrungen in die Zentrifugentrommel dazu kommen, dass mechanische Spannungen im Material der Trommel entstehen oder es sogar zu einem Materialverzug kommt, so dass die Rotationssymmetrie der Zentrifugentrommel gestört wird, was zu Unwuchten im Betrieb führen kann, so dass eine solche Zentrifugentrommel durch das nachträgliche Schweissen und/ oder Einbringen der Bohrungen unbrauchbar wird.

Zudem gestaltet sich das Anschrauben der Fixierstege an die Zentrifugentrommel als schwierig und zeitaufwändig, da der Raum bzw. Platz zwischen der Zentrifugentrommel und dem Zentrifugengehäuse beschränkt ist. Die Anbringung einer für die Verschraubung der Fixierstege notwendigen Schraubenmutter von der Aussenseite der Trommel erfordert daher viel Geschick, so dass hierzu erfahrenes Personal benötigt wird. Dies ist insbesondere beim Nachrüsten von Fixierstegen ein Problem, wenn die Fixierstege an eine bereits in einem Zentrifugengehäuse gelagerte Zentrifugentrommel angebracht werden müssen. Auch wurde beobachtet, dass sich aufgrund der extrem hohen Rotationsgeschwindigkeit der Zentrifugentrommel die Schraubverbindungen zwischen den Fixierstegen und der Zentrifugentrommel lösen können. Es besteht daher die potentielle Gefahr, dass eine an der Aussenseite der Zentrifugentrommel angeordnete und sich gelöste Schraubenmutter in radialer Richtung nach Aussen wegbeschleunigt wird, wodurch erheblicher Schaden an der Zentrifuge, benachbarten Bauteilen und auch Personen angerichtet werden kann.

Ein wesentlicher Nachteil der Fixiereinrichtung mittels Fixierstegen besteht auch darin, dass bauliche Änderungen an der ursprünglichen Zentrifugentrommel, d.h Änderungen am Trommelboden, am Trommeldeckel und/ oder am Trommelmantel, vorgenommen werden müssen. Diese baulichen Änderungen sind nur mit hohem Aufwand wieder rückgängig zu machen, was bedeutet, dass ein Umbau der Zentrifugentrommel in ihren ursprünglichen Zustand nur sehr schwierig möglich ist. Ein solcher Umbau ist jedoch häufig gewünscht, um z.B die Art der Fixiereinrichtung an die jeweilige Anwendung der Zentrifugentrommel anzupassen.

Die JP S56 172347 U offenbart eine Zentrifugentrommel umfassend einen Trommelmantel mit einer Mehrzahl von Ablaufbohrungen. An einer inneren Umfangsfläche des Trommelmantels ist ein Filtermedium vorgesehen, das durch mehrere Fixiereinrichtungen an der inneren Umfangsfläche des Trommelmantels fixiert ist. Die Fixiereinrichtungen umfassen dabei jeweils einen Fixierzapfen mit einem Fixierkragen.

Auch ist in der CN 202 962 681 U eine Zentrifugentrommel offenbart. Bei dieser ist ein Filtertuch an Stegen und Rippen über Fixierzapfen befestigt. Zur Aufnahme der Fixierzapfen sind die Stege und die Rippen mit Bohrungen versehen.

Zudem ist in der DE 635 916 C eine Zentrifugentrommel gezeigt. Bei dieser ist ein Filtertuch im Inneren des Trommelmantels über eine Fixiereinrichtung aus einer Schrauben/ Mutter Konstruktion fixiert.

Die Aufgabe der Erfindung ist es daher, eine weiter verbesserte Zentrifugentrommel vorzuschlagen, bei welcher ein Filtermedium, insbesondere ein Textilfiltertuch, besonders einfach, schnell und zuverlässig in der Zentrifugentrommel eingebaut werden kann, bzw. ausgetauscht werden kann, wobei die Zentrifugentrommel höchste mechanische Stabilität und geringe bauliche Änderungen aufweist, so dass die aus dem Stand der Technik bekannten Nachteile weitgehend vermieden werden.

Die diese Aufgaben lösenden Gegenstände der Erfindung sind durch die Merkmale des unabhängigen Anspruchs 1 gekennzeichnet.

Die abhängigen Ansprüche beziehen sich auf besonders vorteilhafte Ausführungsformen der Erfindung.

Die Erfindung betrifft somit eine Zentrifugentrommel für eine Zentrifuge zur Trennung eines Gemischs in einen Feststoffkuchen und in eine Flüssigphase, umfassend einen die Zentrifugentrommel bildenden Trommeldeckel, einen Trommelboden und einen Trommelmantel, wobei sich der Trommelmantel entlang einer Längsachse der Zentrifugentrommel erstreckt und am Trommelmantel in radialer Richtung zur Längsachse eine Mehrzahl von Ablaufbohrungen mit einem Ablaufdurchmesser angeordnet sind, und der Trommeldeckel und der Trommelboden senkrecht zur Längsachse diametral gegenüberliegend am Trommelmantel angeordnet sind. Der Trommeldeckel, der Trommelboden und der Trommelmantel schliessen gemeinsam einen Innenraum der Zentrifugentrommel ein. Dabei ist die Zentrifugentrommel im Einbauzustand in der Zentrifuge drehbar um die Längsachse angeordnet, im Betriebszustand mittels eines Antriebs mit einer vorgebbaren Drehzahl um die Längsachse rotierbar, und an einer inneren Umfangsfläche des Trommelmantels ist ein Filtermedium vorgesehen, wobei das Filtermedium durch zumindest eine Fixiereinrichtung an der inneren Umfangsfläche des Trommelmantels fixiert ist.

Erfindungsgemäss umfasst die Fixiereinrichtung einen sich entlang einer Zapfenachse erstreckenden Fixierzapfen mit einem Fixierkragen, wobei der Fixierzapfen derart vom Innenraum der Zentrifugentrommel in einer der Ablaufbohrungen angeordnet ist, so dass das Filtermedium durch den Fixierkragen an der inneren Umfangsfläche des Trommelmantels in radialer Richtung zur Längsachse fixiert ist.

Der Fixierzapfen umfasst einen Fixierschaft und einen Fixierkragen bzw. Fixierflansch. Der Fixierschaft weist ein beliebiges Profil, vorzugsweise ein rundes oder eckiges Profil, auf und erstreckt sich entlang einer Zapfenachse. Im Einbauzustand ragt der Fixierzapfen mit einem freien Ende des Fixierschaftes derart in eine der Ablaufbohrungen des Trommelmantels hinein, so dass durch den Fixierkragen das Filtermedium an der inneren Umfangsfläche des Trommelmantels geklemmt bzw. fixiert wird. D.h im Einbauzustand ist der Fixierschaft des Fixierzapfens achsparallel zu einer radial zur Längsachse der Zentrifugentrommel verlaufenden Mittelachse der Ablaufbohrung angeordnet.

Gemäss der Erfindung kann der Fixierzapfen prinzipiell in einer beliebigen Ablaufbohrung des Trommelmantels angebracht werden. Es hat sich jedoch als vorteilhaft herausgestellt, wenn in gleichmässigen Abständen in Umfangsrichtung des Trommelmantels in einer Mehrzahl von Ablaufbohrungen ein Fixierzapfen angebracht ist, so dass eine gleichmässige Fixierung des Filtermediums an der inneren Umfangsfläche des Trommelmantels erzielt wird.

Das heisst, bevorzugt ist in Bezug auf die axiale Richtung an beiden Enden der Zentrifugentrommel eine Vielzahl von Fixierzapfen derart vorgesehen, dass das Filtermedium an der inneren Umfangsfläche des Trommelmantels fixiert ist.

Die Vorteile der erfindungsgemässen Zentrifugentrommel liegen auf der Hand.

Dadurch, dass das Einarbeiten einer Nut bzw. das Anbringen eines Fixiersteges zur Fixierung des Filtermediums in den Trommeldeckel und/oder den Trommelboden und/oder den Trommelmantel entfällt, wird die Herstellung der Zentrifugentrommel wesentlich vereinfacht und ist daher kostengünstiger als die Herstellung der aus dem Stand der Technik bekannten Zentrifugetrommeln mit eingefräster Nut bzw. angebrachtem Fixiersteg, für die Fixierung des Filtermediums. Darüber hinaus ist die erfindungsgemässe Zentrifugentrommel mechanisch viel stabiler, weil das Ausfräsen der Nut bzw. das Einbringen zusätzlicher Bohrungen für die Fixierstege entfällt, somit kein Material aus der Zentrifugentrommel herausgearbeitet werden muss, was an den entsprechenden Stellen bzw. Bereichen bei den bekannten Zentrifugentrommeln zur mechanischen Schwächung des Materials führt.

Die Fixiereinrichtung in Form eines Fixierzapfens mit einem Fixierkragen gemäss der vorliegenden Erfindung ist zudem einfach und schnell an der inneren Umfangsfläche des Trommelmantels der Zentrifugentrommel zu befestigen, und selbst bereits sich im Betrieb befindliche ältere Zentrifugentrommeln, z.B, solche mit Fixiernuten oder Fixierstegen wie Eingangs anhand der Fig. 1 bis Fig. 4 ausführlich beschriebene Zentrifugentrommeln können ohne grossen Aufwand, d.h ohne bauliche Änderungen am Trommeldeckel, dem Trommelboden und dem Trommelmantel, einfach zu einer erfindungsgemässen Zentrifugentrommel umgerüstet werden, in dem die Fixierzapfen nachträglich in Ablaufbohrungen des Trommelmantels eingebaut werden. Das ist besonders dann eine interessante Variante, wenn bei einer älteren Zentrifugentrommel sich die bestehende Fixiereinrichtung im Nachhinein als negativ herausgestellt hat, z.B weil ein Filtermediumwechsel aufgrund der bestehenden Fixiereinrichtung schwierig und zeitaufwändig ist. So ist es z.B. möglich eine Zentrifugentrommel des Typs gemäss Fig.4, der nur für Filtertücher geeignet ist, die mittels eines Spannrings, wie weiter oben bereits beschrieben, in einen Befestigungsraum eingepresst werden, derart umzurüsten, dass auch Filtertücher ohne Spannringe verwendet werden, indem einfach Fixierzapfen gemäss der vorliegenden Erfindung nachträglich in bestehende Ablaufbohrungen an der inneren Umfangsfläche des Trommelmantels der Zentrifugentrommel angebracht werden.

Ein Umrüsten einer bestehenden Zentrifugentrommel aus dem Stand der Technik auf eine erfindungsgemässe Zentrifugentrommel kann sich in unterschiedlichen Fällen lohnen. Z.B., weil die Fixierung des Filtermediums in einer erfindungsgemässen Zentrifugentrommel viel einfacher, schneller und weniger fehleranfällig ist, so dass insbesondere wenn häufige Filtertuchwechsel notwendig sind, sich eine Umrüstung auf eine erfindungsgemässe Zentrifugentrommel allein schon aus diesen Gründen lohnt.

Als besonders wichtiger Vorteil der Erfindung ist zu betonen, dass eine Umrüstung einer aus dem Stand der Technik bekannten Zentrifugentrommel auch direkt vor Ort beim Kunden vorgenommen werden kann, und zwar sogar ohne dass die Zentrifugetrommel für die Umrüstung auf einen erfindungsgemässen Typ, aus der Zentrifuge demontiert werden muss. Das heisst, eine ältere Zentrifugentrommel kann im Einbauzustand in der Zentrifuge direkt vor Ort beim Kunden bequem nachgerüstet werden.

Ausserdem sind bei der erfindungsgemässen Zentrifugentrommel zwei verschiedene Alternativen von Befestigungsmethoden einfach miteinander kombinierbar, d.h eine bekannte Befestigungsmethode aus dem Stand der Technik kann mit der erfindungsgemässen Befestigungsmethode kombiniert werden. Eine solche Kombination zweier verschiedener Befestigungsmethoden ist nur mit der Erfindung möglich, da durch diese keine zusätzlichen baulichen Änderungen an der Zentrifugentrommel vorgenommen werden müssen. Hierdurch können die einzelnen Vorteile, welche die unterschiedlichen Befestigungsmethoden mit sich bringen, optimal ausgenutzt werden.

Zudem ist das Anbringen eines Fixierzapfens an die Zentrifugentrommel schnell und einfach, da der Fixierzapfen direkt vom Innenraum der Zentrifugentrommel angebracht wird. Der Umbau einer bestehenden Zentrifugentrommel zu einer erfindungsgemässen Zentrifugentrommel kann dadurch auch durch weniger erfahrenes Personal vorgenommen werden. Auch weist die erfindungsgemässe Zentrifugentrommel kein Aufbau an der Aussenfläche des Trommelmantels auf, was positiv zur Folge hat, dass keine Teile in radialer Richtung nach Aussen wegbeschleunigt werden können und Schäden an der Zentrifuge, benachbarten Bauteilen und auch Personen entstehen können.

Das Filtermedium selbst ist z.B. ein Filtertuch und/oder ein Stützgewebe, bevorzugt ein Textilfiltertuch und/ oder ein Textilstützgewebe, insbesondere ein Filtertuch und/ oder ein Stützgewebe aus Kunststoff, im Speziellen ein Filtertuch und/ oder ein Stützgewebe aus Polypropylen, und/oder ein Filtertuch und/ oder ein Stützgewebe aus Metall, und/ oder ein Filtertuch und/ oder ein Stützgewebe aus einem Verbundwerkstoff, im Speziellen aus einem Carbon Verbundwerkstoff und/ oder ein Filtertuch und/ oder ein Stützgewebe aus einem anderen geeigneten Werkstoff.
Das üblicherweise zwischen dem Filtertuch und der inneren Umfangsfläche des Trommelmantels angeordnete Stützgewebe, verhindert dabei, dass das Filtertuch aufgrund der enorm hohen Rotationsgeschwindigkeit der Zentrifugentrommel in die Ablauföffnungen eingezogen wird und die Ablauföffnungen durch das Filtertuch verstopft werden. Durch das Stützgewebe wird somit gewährleistet, dass die abzentrifugierte Flüssigphase sicher aus der Zentrifugentrommel nach aussen abgeführt wird.

Bei der erfindungsgemässen Zentrifugentrommel ist somit an der inneren Umfangsfläche des Trommelmantels ein Filtertuch, oder ein Stützgewebe, oder ein Filtertuch und ein Stützgewebe angeordnet. Im erstgenannten Fall, die Zentrifugentrommel weist nur ein Filtertuch auf, und im zweitgenannten Fall, die Zentrifugentrommel weist nur ein Stützgewebe auf, sind das Filtertuch und das Stützgewebe jeweils gemäss der Erfindung, d.h durch einen Fixierzapfen, an der inneren Umfangsfläche des Trommelmantels befestigt. Im letztgenannten Fall, die Zentrifugentrommel weist sowohl ein Filtertuch als auch ein Stützgewebe auf, ist es zum einen möglich, dass das Stützgewebe fest mit der inneren Umfangsfläche des Trommelmantels verbunden ist, z.B durch eine Schweissverbindung, und das Filtertuch lose auf dem Stützgewebe anliegt, wobei das Filtertuch gemäss der Erfindung, d.h durch einen Fixierzapfen, an der inneren Umfangsfläche des Trommelmantels befestigt ist. Zum anderen ist es aber auch möglich, dass das Filtertuch fest mit dem Stützgewebe verbunden ist, z.B durch eine Klebverbindung, und das Stützgewebe gemäss der Erfindung d.h durch einen Fixierzapfen, an der inneren Umfangsfläche des Trommelmantels befestigt ist. Es versteht sich von selbst, dass die erfindungsgemässe Zentrifugentrommel auch eine Kombination der oben aufgeführten Befestigungsmöglichkeiten umfassen kann.

In einem Ausführungsbeispiel ist ein erster äusserer Zapfendurchmesser des Fixierzapfens grösser als der Ablaufdurchmesser der Ablaufbohrungen. Der erste äussere Zapfendurchmesser ist dabei im Nichteinbauzustand des Fixierzapfens grösser als der Ablaufdurchmesser der Ablaufbohrungen, wobei im Einbauzustand der erste äussere Zapfendurchmesser und der Ablaufdurchmesser der Ablaufbohrungen identisch sind. Demnach bilden bei diesem Ausführungsbeispiel der Fixierzapfen und die Ablaufbohrung gemeinsam eine Presspassung, d.h zur Fixierung des Filtermediums an der inneren Umfangsfläche des Trommelmantels, wird der Fixierzapfen z.B mittels eines Hammers, in eine der Ablaufbohrungen eingeschlagen bzw. eingepresst.

In einem bevorzugten Ausführungsbeispiel ist der erste und/oder ein zweiter äusserer Zapfendurchmesser des Fixierzapfens kleiner als der Ablaufdurchmesser der Ablaufbohrungen. Bei diesem Ausführungsbeispiel wird z.B in die Ablaufbohrung eine separate Hülse in Form eines Dübels eingebracht, wobei der Fixierzapfen als eine Schraube mit einem Schraubenschaft und einem Schraubenkopf ausgebildet ist, und die Schraube im Einbauzustand in die Hülse eingeschraubt ist, und das Filtermedium durch den Schraubenkopf an der inneren Umfangsfläche des Trommelmantels fixiert ist. Damit die Schraube in der Ablaufbohrung eine fest definierte Klemmstelle hat, weist der Schraubenschaft zwei unterschiedliche äussere Schaftdurchmesser auf, einen ersten grösseren äusseren Schaftdurchmesser und einen zweiten kleineren äusseren Schaftdurchmesser, wobei beide Schaftdurchmesser kleiner als der Ablaufdurchmesser der Ablaufbohrungen sind. Aufgrund der Ausbildung des Schraubenschaftes wird erzielt, dass die Schraube an der Stelle ihres ersten grösseren Schaftdurchmessers, welcher mit einem Aussengewinde versehen ist, in der Ablaufbohrung geklemmt ist.

Das Ausführungsbeispiel kann aber auch z.B derart ausgeführt sein, dass in einer der Ablaufbohrungen zumindest ein Verriegelungselement in Form einer Hülse vorgesehen ist, welches mit einem in radialer Richtung zur Zapfenachse flexibel ausweichbaren Teilabschnitt versehen ist, und der Fixierzapfen an einer äusseren Umfangsfläche eine Vertiefung, insbesondere eine umlaufende Vertiefung, aufweist, wobei der flexibel ausweichbare Teilabschnitt in Betriebsstellung in die Vertiefung des Fixierzapfens hineinragt und den Fixierzapfen in Richtung der Zapfenachse sichert, d.h der Fixierzapfen ist nicht wie im oben beschriebenen Beispiel über eine Schraubverbindung sondern über Steckverbindung bzw. Schnappverbindung in einer der Ablaufbohrungen befestigt. Aufgrund der Steckverbindung bzw. Schnappverbindung ist eine einfache und schnelle Montage bzw. Demontage des Fixierzapfens möglich. Der Fixierzapfen weist einen ersten und im Bereich der Vertiefung einen zweiten äusseren Zapfendurchmesser auf, welche beide kleiner als der Ablaufdurchmesser der Ablaufbohrungen sind.

In einem anderen Beispiel weist der Fixierzapfen entlang der Zapfenachse über zumindest einen Teil seiner Länge eine Zapfenbohrung, insbesondere eine Zapfendurchgangsbohrung, auf. Durch die Zapfenbohrung kann das Gewicht der erfindungsgemässen Zentrifugentrommel stark reduziert werden, was sich insbesondere positiv auf die Beschleunigung der Zentrifugentrommel aus dem Ruhezustand auswirkt. Durch eine Zapfendurchgangsbohrung wird zudem gewährleistet, dass die abzentrifugierte Flüssigphase trotz der Fixiereinrichtung sicher aus der Zentrifugentrommel nach aussen abgeführt wird. D.h die Zapfendurchgangsbohrung stellt sicher, dass die Abflaufbohrungen durch Anwendung der Fixiereinrichtung nicht unnötig versperrt werden.

Als positiv hat es sich hierbei auch herausgestellt, wenn der Fixierzapfen quer zur Zapfenbohrung eine Zapfennut bzw. einen Zapfenschlitz aufweist. Die Zapfennut ist dabei am Fixierschaft des Fixierzapfens angeordnet, hat eine Breite von 2-10mm und erstreckt sich von einem freien Ende des Fixierschaftes in Richtung des Fixierkragens. Aufgrund der Zapfennut lässt sich der Fixierzapfen im Einbauzustand aufspreizen, wodurch eine verbesserte Klemmwirkung des Fixierzapfens in der Abflaufbohrung erzielt wird.

Bevorzugt, aber nicht notwendig, kann die Zapfennut bzw. der Zapfenschlitz dabei parallel zur Längsachse der Zentrifugentrommel ausgerichtet sein, d.h die Zapfennut ist parallel zu einer kurzen Ellipsenachse der Abflaufbohrung angeordnet. Die Spreizung des Fixierzapfens erfolgt hierdurch in Richtung einer langen Ellipsenachse der Abflaufbohrung, wodurch der Fixierzapfen gleichzeitig optimal geklemmt und verdreh gesichert wird.

In einem für die Praxis besonders wichtigen Ausführungsbeispiel umfasst die Fixiereinrichtung zusätzlich zum Fixierzapfen einen Klemmbolzen, der in der Zapfenbohrung angeordnet ist. Der Klemmbolzen bewirkt im Einbauzustand des Fixierzapfens eine Spreizung bzw. Ausdehnung des ersten und/ oder des zweiten äusseren Zapfendurchmessers, wodurch eine Klemmung zwischen dem Fixierzapfen und der Innenfläche der Abflaufbohrung erzielt wird. Der Klemmbolzen kann dabei in verschiedenen Varianten ausgeführt sein. In einer ersten Variante ist der Klemmbolzen als ein Spannstift ausgeführt, welcher in die Zapfenbohrung zumindest teilweise eingeschlagen bzw. eingepresst wird. In einer zweiten Variante kann der Klemmbolzen auch als ein Nietbolzen ausgeführt sein, der mit dem Fixierzapfen vernietet ist. In einer weiteren Variante ist es auch möglich, dass der Klemmbolzen nicht zylindrisch sondern kugelförmig ausgeführt ist.

Bei diesem Ausführungsbeispiel hat es sich auch als vorteilhaft herausgestellt, wenn der Klemmbolzen als eine Fixierschraube ausgebildet ist und die Zapfenbohrung ein Zapfengewinde aufweist, über welches die Fixierschraube mit dem Fixierzapfen verschraubt ist. Die Fixierschraube bewirkt im Einbauzustand des Fixierzapfens eine Spreizung bzw. Ausdehnung des ersten und/ oder des zweiten äusseren Zapfendurchmessers, wodurch eine Klemmung zwischen dem Fixierzapfen und der Innenfläche der Abflaufbohrung erzielt wird. Auch die Fixierschraube kann verschiedenartig ausgebildet sein, z.B als eine Senkkopfschraube oder als eine Madenschraube.

Auch ist es durchaus denkbar, dass die Fixiereinrichtung zusätzlich zum Fixierzapfen und der Fixierschraube noch einen kegelstumpfförmigen Spreitzkeil mit Innengwinde aufweist, wobei der Fixierzapfen neben dem Fixierkragen und dem Fixierschaft eine Durchgangsbohrung aufweist, welche an einem freien Ende des Fixierschafts in eine sich erweiterne konische Bohrung übergeht. Der kegelstumpfförmige Spreitzkeil ist passend zur konischen Bohrung ausgebildet und bildet im Einbauzustand mit der konischen Bohrung einen Formschluss. Wird die Fixierschraube in das Innengewinde des Spreitzkeils eingeschraubt, kommt es zu einer Spreizung des Spreitzkeils, wodurch eine Klemmung zwischen dem Fixierzapfen und der Innenfläche der Abflaufbohrung erzielt wird.

Der Fixierkragen des Fixierzapfens ist bevorzugt rund ausgebildet, so dass der Fixierkragen einen Kragendurchmesser aufweist. In der Praxis hat es sich gezeigt, dass mit einem runden Fixierkragen eine ausreichende Klemmung bzw. Fixierung des Filtermediums an der inneren Umfangsfläche des Trommelmantels erzielt wird, wobei gleichzeitig eine Beschädigung des Filtermediums durch den Fixierkragen vermieden wird.

Alternativ kann der Fixierkragen natürlich auch n-eckig ausgebildet sein, so dass der Fixierzapfen mittels eines Schraubenschlüssels in der Ablaufbohrung einfach anbringbar ist. Die Fixierung des Filtermediums an der inneren Umfangsfläche des Trommelmantels wird hierdurch stark vereinfacht.

Bei der Fertigung des Trommelmantels wird ein mit zylindrisch ausgebildeten Ablaufbohrungen versehenes ebenes Blech in die zylindrische Form des Trommelmantels überführt, wodurch das Material an der Aussenseite des Trommelmantels gestreckt und an der inneren Umfangsfläche des Trommelmantels gestaucht wird. Hierbei verändert sich die ursprünglich zylindrische Form der Ablaufbohrungen in eine leicht konische Form, d.h der gefertigte Trommelmantel besitzt leicht konisch ausgebildetete Ablaufbohrungen, so dass der Ablaufdurchmesser der Ablaufbohrungen nicht konstant ist, sondern sich von der inneren Umfangsfläche in radialer Richtung zur Aussenfläche des Trommelmantels kontinuierlich vergrössert. Aufgrund der leicht konischen Ablaufbohrungen wird der Fixierzapfen in der Ablaufbohrung nach hinten, d.h in Richtung der Aussenfläche des Trommelmantels gezogen, was den positiven Effekt hat, dass bei allen oben beschriebenen erfindungsgemässen Ausführungsbeispielen die Klemmwirkung des Fixierkragens, d.h die Klemmung zwischen Fixierkragen und Filtermedium, weiter verstärkt wird.

Ganz generell ist ausdrücklich zu betonen, dass alle an sich bekannten Fixiermethoden bzw. die dazugehörigen Filtermedien bzw. Filtertücher, die aus dem Stand der Technik zur Fixierung geeignet sind und einleitend bereits teilweise ausführlich beschrieben wurden, ohne irgendwelche Modifikationen auch in einer erfindungsgemässen Zentrifugentrommel vorteilhaft verwendet werden können.

Dabei kann eine erfindungsgemässe Zentrifugentrommel grundsätzlich in jeder Art von Zentrifuge vorteilhaft verwendet werden. Daher betrifft die Erfindung weiterhin auch eine Zentrifuge, insbesondere eine vertikal oder horizontal gelagerte Zentrifuge, eine kontinuierlich oder diskontinuierlich arbeitende Zentrifuge, im Speziellen eine Schälzentrifuge, Gleitzentrifuge, eine ein- oder mehrstufige Schubzentrifuge, eine Doppelschubzentrifuge oder Schwingzentrifuge mit einer Zentrifugentrommel gemäss der vorliegenden Erfindung.

Im Folgenden wird die Erfindung an Hand der schematischen Zeichnungen näher erläutert. Es zeigen:
Fig. 1 : Eine aus dem Stand der Technik bekannte Zentrifugentrommel;
Fig. 2 : ein erstes Ausführungsbeispiel eines bekannten Schnellspannrings;
Fig. 2a : ein zweites Ausführungsbeispiel eines bekannten Schnellspannschlosses;
Fig. 3a : eine erstes Ausführungsbeispiel einer bekannten Zentrifugentrommel mit Fixiernut;
Fig. 3b : ein zweites Ausführungsbeispiel gemäss Fig. 3a;
Fig. 3c : ein drittes Ausführungsbeispiel gemäss Fig. 3a;
Fig. 3d : ein viertes Ausführungsbeispiel gemäss Fig. 3a:
Fig. 4 : ein erstes Ausführungsbeispiel einer bekannten Zentrifugentrommel mit Fixiersteg;
Fig. 5 : ein erstes Ausführungsbeispiel einer erfindungsgemässen Zentrifugentrommel;
Fig. 6 : ein erstes Ausführungsbeispiel einer umgerüsteten Zentrifugentrommel gemäss Fig.1;
Fig. 7 : eine perspektivische Ansicht eines Fixierzapfens mit Fixierkragen;
Fig. 8a : ein Detail eines ersten Ausführungsbeispiels einer Fixiereinrichtung gemäss Fig. 5 und Fig.6;
Fig. 8b : ein zweites Ausführungsbeispiel gemäss Fig. 8a;
Fig. 8c : ein drittes Ausführungsbeispiel gemäss Fig. 8a;
Fig. 8d : ein viertes Ausführungsbeispiel gemäss Fig. 8a;
Fig. 8e : ein fünftes Ausführungsbeispiel gemäss Fig. 8a;
Fig. 8f: ein sechstes Ausführungsbeispiel gemäss Fig. 8a;

Wie bereits erwähnt, zeigen die Fig. 1 bis Fig.4 den Stand der Technik und wurden bereits eingangs eingehend erläutert, so dass hier auf eine weitere Diskussion verzichtet werden kann.

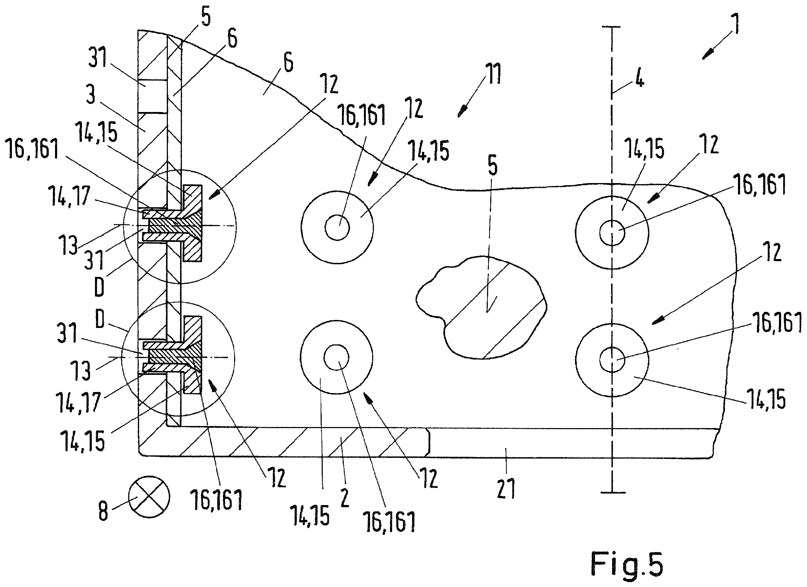

Fig. 5 zeigt im Schnitt in einer schematischen Darstellung teilweise ein erstes Ausführungsbeispiel einer erfindungsgemässen Zentrifugentrommel, die im Folgenden gesamthaft mit dem Bezugszeichen 1 bezeichnet wird. Die in den Fig. 5 bis Fig. 8f verwendeten Bezugszeichen tragen dabei kein Hochkomma, da sich diese Figuren auf Ausführungsbeispiele der vorliegenden Erfindung beziehen. Wie bereits oben erwähnt, tragen nur die Bezugszeichen der Fig. 1 bis Fig. 4 ein Hochkomma, da diese sich auf den bekannten Stand der Technik beziehen.

Die Zentrifugentrommel 1 umfasst in an sich bekannter Weise einen die Zentrifugentrommel 1 bildenden Trommelmantel 3 mit Ablaufbohrungen 31, durch die abzentrifugierte Flüssigphase aus der Zentrifugentrommel 1 abführbar ist, und einen Trommeldeckel 2, durch den z.B. durch die Öffnung 21 eine zu entfeuchtende Suspension einbringbar ist. Des Weiteren wird die Zentrifugentrommel 1 durch einen aus Gründen der Übersichtlichkeit nicht dargestellten Trommelboden gebildet, der mit einem ebenfalls nicht dargestellten Drehantrieb zum Antrieb der Zentrifugentrommel 1 gekoppelt ist.

Der Trommelmantel 3 erstreckt sich zylinderförmig entlang der Längsachse 4 der Zentrifugentrommel 1, und der Trommeldeckel 2 und der Trommelboden sind senkrecht zur Längsachse 4 diametral gegenüberliegend am Trommelmantel 3 angeordnet und bilden so die beiden Endflächen der zylindrischen Zentrifugentrommel 1. Der Trommeldeckel 2, der Trommelboden und der Trommelmantel 3 schliessen gemeinsam einen Innenraum 11 der Zentrifugentrommel 1 ein.

Bei der erfindungsgemässen Zentrifugentrommel 1 gemäss Fig. 5 ist an einer inneren Umfangsfläche 5 des Trommelmantels 3 ein Filtertuch 6 durch eine Vielzahl von Fixiereinrichtungen 12 befestigt. Die Fixiereinrichtungen 12 umfassen jeweils einen sich entlang einer Zapfenachse 13 erstreckenden Fixierzapfen 14 mit einem Fixierkragen 15 und einen Klemmbolzen 16. Die Fixierzapfen 14 sind dabei derart vom Innenraum 11 der Zentrifugentrommel 1 in einer der Ablaufbohrungen 31 angeordnet, so dass das Filtertuch 6 durch den Fixierkragen 15 an der inneren Umfangsfläche 5 des Trommelmantels 3 in radialer Richtung zur Längsachse 4 fixiert ist. Der Klemmbolzen 16 ist als eine Fixierschraube 161 ausgebildet, die über ein Zapfengewinde mit dem Fixierzapfen 14 verschraubt ist. Die Fixierschraube 161 bewirkt im Einbauzustand eine Spreizung eines Fixierschaftes 17 des Fixierzapfens 14, wodurch eine Klemmung zwischen dem Fixierzapfen 14 und einer Innenfläche der Abflaufbohrung 31 erzielt wird.

Die Fixiereinrichtungen 12 sind in Bezug auf die axiale Richtung der Zentrifugentrommel 1 an beiden Enden der Zentrifugentrommel 1, d.h an der Unter- und Oberseite des Trommelmantels 3, angeordnet. Die Fixiereinrichtungen 12 sind dabei in gleichmässigen Abständen in Umfangsrichtung 8 des Trommelmantels 3 in einer Mehrzahl von Ablaufbohrungen 31 angebracht, so dass eine gleichmässige Fixierung des Filtertuchs 6 an der inneren Umfangsfläche 5 des Trommelmantels 3 erzielt wird.

Zur Montage wird das Filtertuch 6 sodann auf der inneren Umfangsfläche 5 der Zentrifugentrommel 1 platziert, die Fixierzapfen 14 werden in die entsprechenden Ablaufbohrungen 31 eingebracht und mittels der Fixierschrauben 161 in axialer Richtung zur Zapfenachse 13 gesichert, wodurch das Filtertuch 6 an der inneren Umfangsfläche 5 des Trommelmantels 3 durch die Fixierkragen 15 fixiert wird.

Somit illustriert Fig. 5 eindrücklich, dass durch die vorliegende Erfindung auf eine Nut bzw. eine zusätzliche Bohrung am Trommelmantel 3 zur Befestigung des Filtertuchs 6 verzichtet werden kann.

In dem in Fig. 5 gezeigten Ausführungsbeispiel ist es durchaus denkbar, dass anstelle des Filtertuches ein Stützgewebe an der inneren Umfangsfläche des Trommelmantels durch eine Vielzahl von Fixiereinrichtungen befestigt ist.

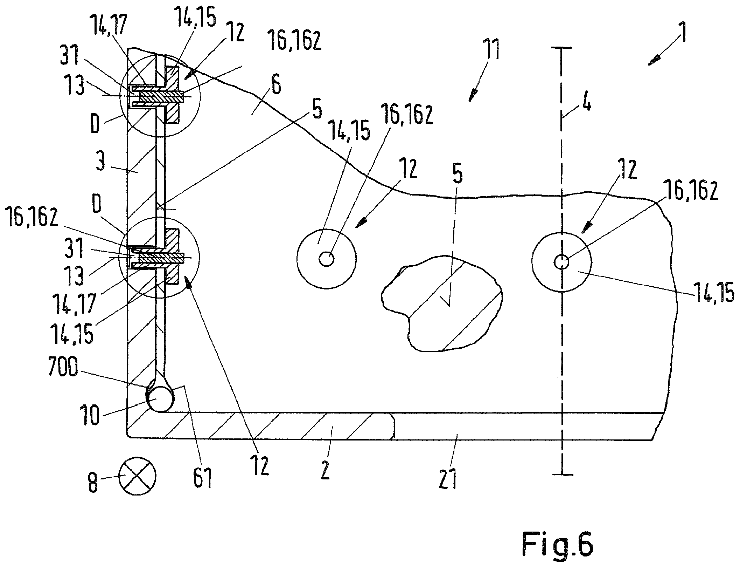

Fig. 6 zeigt im Schnitt in einer schematischen Darstellung teilweise ein erstes Ausführungsbeispiel einer umgerüsteten Zentrifugentrommel gemäss Fig.1.

Die Zentrifugentrommel 1 umfasst in wohlbekannter Weise einen die Zentrifugentrommel 1 bildenden Trommelmantel 3 mit Ablauföffnungen 31, durch die abzentrifugierte Flüssigphase aus der Zentrifugentrommel 1 abführbar ist, und einen Trommeldeckel 2, durch den z.B. durch die Öffnung 21 eine zu entfeuchtende Suspension eingebracht werden kann. Des Weiteren wird die bekannte Zentrifugentrommel 1 durch einen aus Gründen der Übersichtlichkeit in Fig. 6 nicht dargestellten Trommelboden gebildet, der zum Antrieb der Zentrifugentrommel 1 mit einem ebenfalls nicht dargestellten Drehantrieb gekoppelt ist. Der Trommelmantel 3 erstreckt sich zylinderförmig entlang der Längsachse 4 der Zentrifugentrommel 1 und der Trommeldeckel 2 und der Trommelboden sind senkrecht zur Längsachse 4 diametral gegenüberliegend am Trommelmantel 3 angeordnet und bilden so die beiden Endflächen der zylindrischen Zentrifugentrommel 1. Der Trommeldeckel 2, der Trommelboden und der Trommelmantel 3 schliessen gemeinsam einen Innenraum 11 der Zentrifugentrommel 1 ein.

An einer inneren Umfangsfläche 5 des Trommelmantels 3 ist ein Filtermedium 6, im vorliegenden Fall ein Textilfiltertuch 6 vorgesehen, wobei zur Fixierung des Textilfiltertuchs 6 zwei unterschiedliche Befestigungsmethoden zum Einsatz kommen. Zum einen die Befestigungsmethode, welche von der Zentrifugentrommel aus Fig.1 bekannt ist, und zum anderen die Befestigungsmethode gemäss der Erfindung.

Die Zentrifugentrommel 1 weist zur Anwendung der bekannten Befestigungsmethode wie bereits weiter oben in Bezug auf Fig.1 beschrieben, an beiden Enden an der inneren Umfangsfläche 5 des Trommelmantels 3 eine eingefräste Nut 700 auf, in der das Filtertuch 6 mittels eines Spannrings 10 fixiert ist. Dazu ist, bezogen auf die axiale Längsrichtung 4, an beiden Enden des Filtertuchs 6 in Umfangsrichtung 8 ein umlaufender Hohlsaum 61 vorgesehen, in den der Spannring 10 vor der Montage des Filtertuchs 6 in der Zentrifugentrommel 1 eingeführt wird.

Die Zentrifugentrommel 1 weist zudem zur Fixierung des Filtertuchs 6 eine Vielzahl von Fixiereinrichtungen 12 gemäss der Erfindung auf, welche in gleichmässigen Abständen in Umfangsrichtung 8 des Trommelmantels 3 in einer Mehrzahl von Ablaufbohrungen 31 angebracht sind. Die Fixiereinrichtungen 12 umfassen dabei jeweils einen sich entlang einer Zapfenachse 13 erstreckenden Fixierzapfen 14 mit einem Fixierkragen 15 und einen Klemmbolzen 16. Die Fixierzapfen 14 sind derart vom Innenraum 11 der Zentrifugentrommel 1 in einer der Ablaufbohrungen 31 angeordnet, so dass das Filtertuch 6 zusätzlich zu den beiden Spannringen 10 durch die Fixierkragen 15 an der inneren Umfangsfläche 5 des Trommelmantels 3 in radialer Richtung zur Längsachse 4 fixiert ist. Der Klemmbolzen 16 ist als ein Spannstift 162 ausgebildet, der im Einbauzustand in eine Zapfenbohrung 19 des Fixierzapfens 14 eingepresst bzw. eingeschlagen ist. Der Spannstift 162 bewirkt eine Spreizung eines Fixierschaftes 17 des Fixierzapfens 14, wodurch eine Klemmung zwischen dem Fixierzapfen 14 und einer Innenfläche der Abflaufbohrung 31 herbeigeführt wird.

Aus Gründen der Übersichtlichkeit ist in Fig. 6 nur die Befestigung des Filtertuchs 6 im Bereich des Trommeldeckels 2 abgebildet. Auf der dem Trommeldeckel 2 diametral gegenüberliegenden Seite, d.h im Bereich des Trommelbodens, ist das Filteruch 6 ebenfalls mit einem Spannring 10 und einer Vielzahl von Fixiereinrichtungen 12 gemäss der Erfindung an der inneren Umfangsfläche 5 des Trommelmantels 3 fixiert.

Zur Montage wird das Filtertuch 6 auf der inneren Umfangsfläche 5 der Zentrifugentrommel 1 platziert, der Hohlsaum 61 mit Spannring 10 in die Nut 700 am Trommeldeckel 2 und dem nicht abgebildeten Trommeldeckel eingelegt und der Spannring 10 z.B. mittels einer Schnellspannvorrichtung, die an sich bekannt ist und bei der Diskussion des Stands der Technik bereits erläutert wurde, fixiert. Zudem werden die Fixierzapfen 14 in die entsprechenden Ablaufbohrungen 31 eingebracht und mittels des Spannstifts 162 in axialer Richtung zur Zapfenachse 13 gesichert, wodurch das Filtertuch 6 an der inneren Umfangsfläche 5 des Trommelmantels 3 zusätzlich durch die Fixierkragen 15 der Fixierzapfen 14 fixiert wird.

Fig. 6 illustriert somit eindrücklich, dass durch die vorliegende Erfindung zwei unterschiedliche Befestigungsmethoden miteinander kombinierbar sind, so dass eine bekannte Zentrifugentrommel mit einer Fixiereinrichtung 12 gemäss der Erfindung nachgerüstet werden kann.

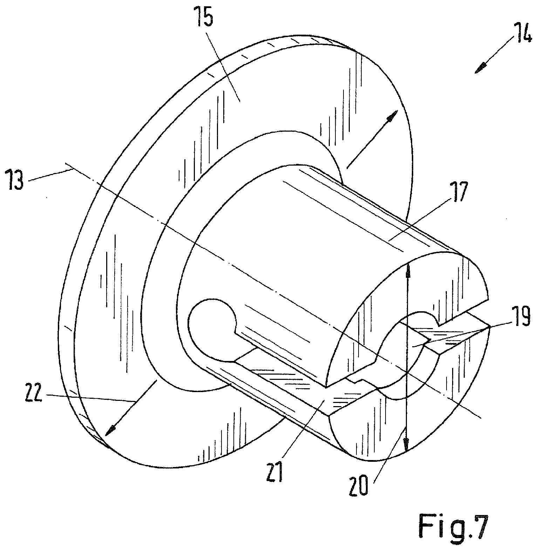

Fig.7 zeigt eine perspektivische Ansicht eines Fixierzapfens 14. Der Fixierzapfen 14 umfasst einen Fixierschaft 17 und einen Fixierkragen 15. Der Fixierschaft 17 erstreckt sich entlang einer Zapfenachse 13 und hat ein rundes Profil mit einem äusseren Zapfendurchmesser 20. Wie aus Fig.5 und Fig. 6 hervorgeht ragt der Fixierzapfen 14 im Einbauzustand mit dem Fixierschaft 17 derart in eine der Ablaufbohrungen 31 des Trommelmantels 3 hinein, so dass durch den Fixierkragen 15 das Filtertuch 6 an der inneren Umfangsfläche 5 des Trommelmantels 3 geklemmt bzw. fixiert wird. Der Fixierzapfen 14 weist entlang der Zapfenachse 13 eine Zapfenbohrung 19 auf. Der Fixierzapfen 14 weist zudem quer zur Zapfenbohrung 19 eine Zapfennut 21 auf. Die Zapfennut 21 ist dabei am Fixierschaft 17 des Fixierzapfens 14 angeordnet und erstreckt sich von einem freien Ende des Fixierschafts 17 in Richtung des Fixierkragens 15. Aufgrund der Zapfennut 21 lässt sich der Fixierschaft 17 im Einbauzustand aufspreizen, wodurch eine verbesserte Klemmwirkung des Fixierzapfens 14 in der Abflaufbohrung 31 erzielt wird. Der Fixierkragen ist in diesem Beispiel rund ausgebildet.

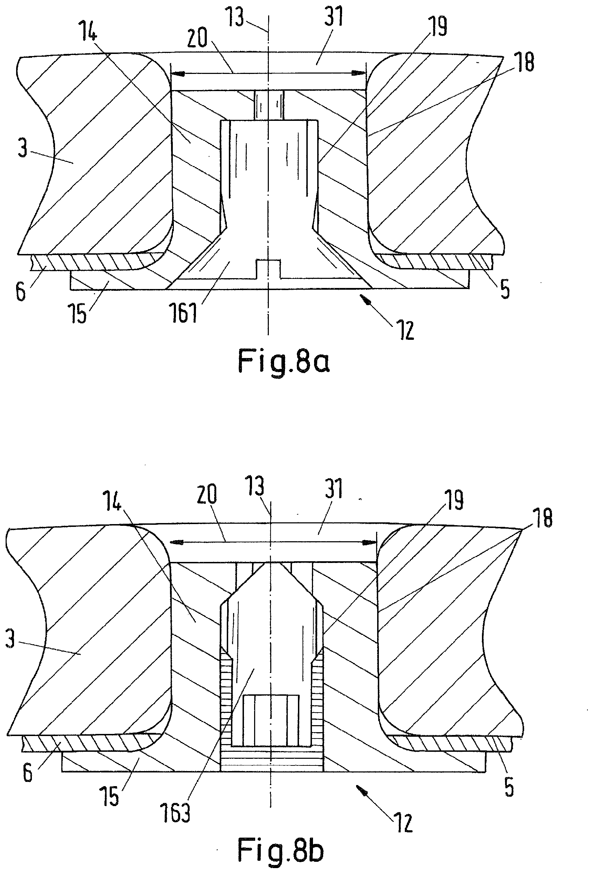

Fig. 8a bis Fig.8f zeigen das Detail D gemäss Fig. 5 und Fig.6 in einer vergrösserten Darstellung, wobei in den genannten Figuren unterschiedliche Ausführungsbeispiele der Fixiereinrichtung 12 gemäss der Erfindung dargestellt sind.

Fig. 8a zeigt ein erstes Ausführungsbeispiel der Fixiereinrichtung 12 gemäss der Erfindung. Die Fixiereinrichtung 12 umfasst dabei einen Fixierzapfen 14 und eine Fixierschraube 161 in Form einer Senkschraube. Der Fixierzapfen 14 erstreckt sich entlang einer Zapfenachse 13 und weist eine Zapfenbohrung 19 mit einem Zapfengewinde auf. Über das Zapfengewinde ist die Fixierschraube 161 mit dem Fixierzapfen 14 verschraubt. Die Fixierschraube 161 bewirkt im Einbauzustand des Fixierzapfens 14 eine Spreizung eines äusseren Zapfendurchmessers 20 des Fixierzapfens 14, wodurch eine Klemmung zwischen dem Fixierzapfen 14 und einer Innenfläche 18 der Abflaufbohrung 31 erzielt wird. Aufgrund der Klemmung wird das Filtertuch 6 durch den Fixierkragen 15 des Fixierzapfens 14 an der inneren Umfangsfläche 5 des Trommelmantels 3 fixiert.

Wie aus Fig. 8b hervorgeht, kann anstatt der Senkkopfschraube auch eine Madenschraube zur Erzeugung der Klemmwirkung zwischen dem Fixierzapfen 14 und der Innenfläche 18 der Abflaufbohrung 31 verwendet werden.

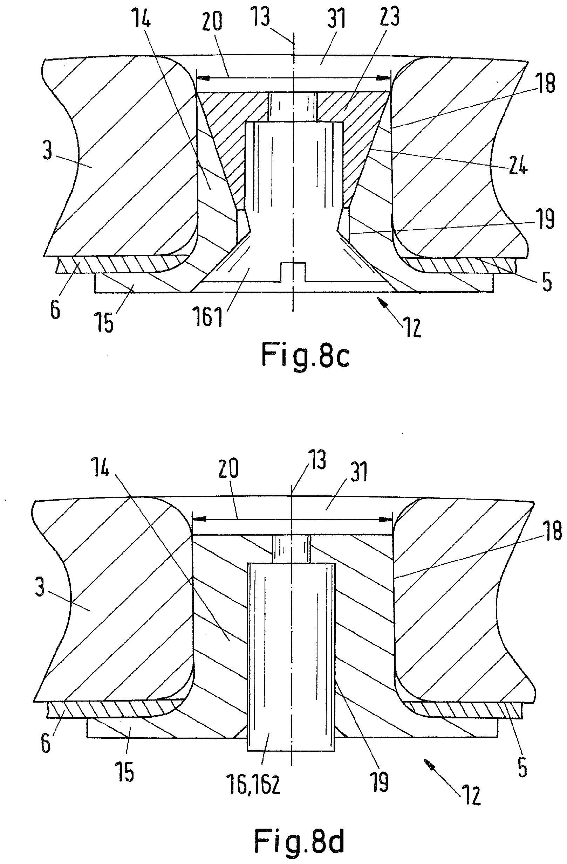

Fig. 8c zeigt ein weiteres Ausführungsbeispiel der Fixiereinrichtung 12 gemäss der Erfindung. Bei diesem weist die Fixiereinrichtung 12 im Vergleich zu den Ausführungsbeispielen aus Fig.8a und Fig.8b zusätzlich zum Fixierzapfen 14 und der Fixierschraube 161 einen kegelstumpfförmigen Spreitzkeil 23 mit Innengwinde auf. Der Fixierzapfen 14 hat dabei eine Zapfenbohrung 19 ohne Innengewinde, wobei die Zapfenbohrung 19 an einem freien Ende des Fixierzapfens 14 in eine sich erweiternde konische Bohrung 24 übergeht. Der kegelstumpfförmige Spreitzkeil 23 ist passend zur konischen Bohrung 24 ausgebildet und bildet im Einbauzustand mit der konischen Bohrung 24 einen Formschluss. Wird die Fixierschraube 161 in das Innengewinde des Spreitzkeils 23 eingeschraubt, kommt es zu einer Spreizung des Fixierzapfens 14, wodurch eine Klemmung zwischen dem Fixierzapfen 14 und der Innenfläche 18 der Abflaufbohrung 31 erzielt wird. Auch in diesem Ausführungsbeispiel wird das Filtertuch 6 aufgrund der Klemmung durch einen Fixierkragen 15 des Fixierzapfens 14 an der inneren Umfangsfläche 5 des Trommelmantels 3 fixiert.

Gemäss Fig. 8d kann die Fixiereinrichtung 12 auch zusätzlich zum Fixierzapfen 14 einen Klemmbolzen 16 in Form eines Spannstifts 162 aufweisen. Der Fixierzapfen 14 entspricht dabei dem Fixierzapfen 14 aus Fig.7, wobei der Spannstift 162 in einer Zapfenbohrung 19 des Fixierzapfens 14 eingeschlagen bzw. eingepresst ist. Der Spannstift 162 bewirkt im Einbauzustand eine Spreizung des Fixierzapfens 14 wodurch eine Klemmung zwischen dem Fixierzapfen 14 und einer Innenfläche 18 der Abflaufbohrung 31 erzielt wird. Wie in den vorhergehenden Ausführungsbeispielen wird das Filtertuch 6 aufgrund der Klemmung durch einen Fixierkragen 15 des Fixierzapfens 14 an der inneren Umfangsfläche 5 des Trommelmantels 3 fixiert. Alternativ ist es aber auch möglich, dass der Klemmbolzen 16 anstatt eines Spannstift 162 als ein Nietbolzen ausgebildet ist, der mit dem Fixierzapfen 14 vernietet ist.

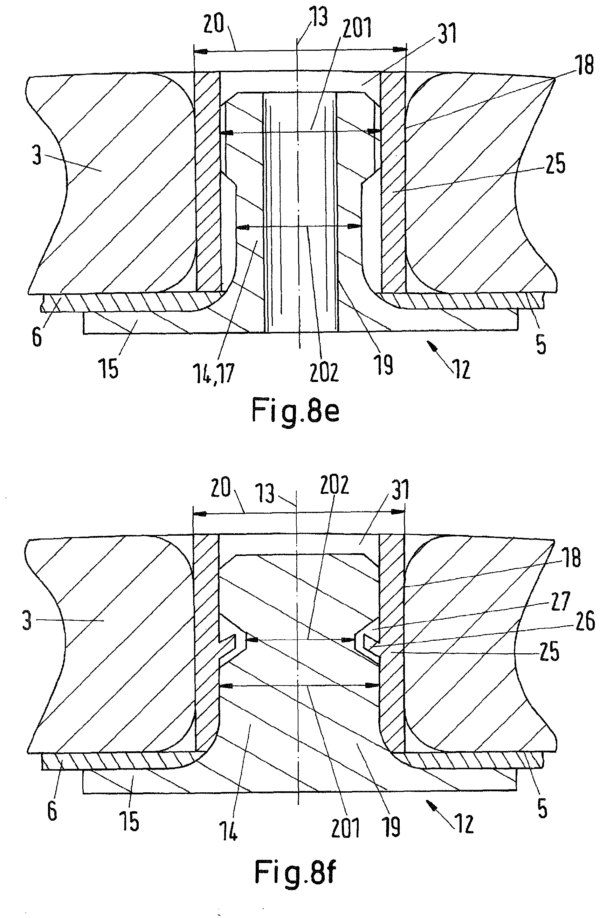

In den Ausführungsbeispielen in Fig. 8e und Fig. 8f weist die Fixiereinrichtung 12 zusätzlich eine in die Ablaufbohrung 31 des Trommelmantels 3 eingebrachte separate Hülse 25 auf. Die Hülse 25 ist dabei in Form eines Dübels ausgebildet.

In Fig. 8e ist der Fixierzapfen 14 in Form einer Schraube ausgebildet. Der Fixierzapfen 14 ist im Einbauzustand in die in der Ablaufbohrung 31 eingebrachte Hülse 25 eingeschraubt, wobei das Filtertuch 6 durch einen Fixierkragen 15 an der inneren Umfangsfläche 5 des Trommelmantels 3 fixiert ist. Damit der Fixierzapfen 14 in der Ablaufbohrung 31 eine fest definierte Klemmstelle hat, weist ein Fixierschaft 17 des Fixierzapfens 14 zwei unterschiedliche äussere Zapfendurchmesser auf, einen ersten grösseren äusseren Zapfendurchmesser 201 und einen zweiten kleineren äusseren Zapfendurchmesser 202, wobei der erste grössere äussere Zapfendurchmesser 201 mit einem Aussengewinde versehen ist. Aufgrund der beiden unterschiedlichen Zapfendurchmesser wird erzielt, dass der Fixierzapfen 14 an der Stelle des ersten grösseren Zapfendurchmessers 201 in der Ablaufbohrung 31 geklemmt ist.

Wie aus Fig.8f hervorgeht, kann die in der Ablaufbohrung 31 angebrachte Hülse 25 auch mit einem in radialer Richtung zur Zapfenachse 13 flexibel ausweichbaren Teilabschnitt 26 versehen sein, und der Fixierzapfen 14 an einer äusseren Umfangsfläche eine umlaufende Vertiefung 27 aufweisen, wobei der flexibel ausweichbare Teilabschnitt 26 in Betriebsstellung in die Vertiefung 27 des Fixierzapfens 14 hineinragt und den Fixierzapfen 14 in Richtung der Zapfenachse 13 sichert. D.h der Fixierzapfen 14 ist nicht wie in Fig.8e über eine Schraubverbindung sondern über Steckverbindung bzw. Schnappverbindung in einer der Ablaufbohrungen 31 befestigt. Der Fixierzapfen 14 hat einen ersten äusseren Zapfendurchmesser 201, mit welchem der Fixierzapfen 14 an der Hülse 25 anliegt, und im Bereich der Vertiefung 27 einen zweiten äusseren Zapfendurchmesser 202.

In den in Fig.8a bis Fig.8f gezeigten Ausführungsbeispielen einer Fixiereinrichtung 12 gemäss der Erfindung sind ein erster und/oder ein zweiter äusserer Zapfendurchmesser 201,202 des Fixierzapfens 14 kleiner als der Ablaufdurchmesser der Ablaufbohrungen 31. Auch ist natürlich eine Ausführung des Fixierzapfens 14 möglich, bei welcher ein äusserer Zapfendurchmesser 20 des Fixierzapfens 14 grösser als der Ablaufdurchmesser der Ablaufbohrungen 31 ist, so dass der Fixierzapfen 14 in die Ablaufbohrung 31 eingepresst bzw. eingeschlagen wird.

Es versteht sich von selbst, dass die Merkmale der zuvor exemplarisch beschriebenen besonders bevorzugten Ausführungsbeispiele der erfindungsgemässen Zentrifugentrommel, je nach Anforderung, auch beliebig in vorteilhafter Weise kombinierbar sind und prinzipiell bei allen bekannten Zentrifugentypen anwendbar sind. Insbesondere kann eine erfindungsgemässe Zentrifugentrommel in einer vertikal oder horizontal gelagerten Zentrifuge, in einer kontinuierlich oder diskontinuierlich arbeitenden Zentrifuge, im Speziellen in einer, Schälzentrifuge, Gleitzentrifuge, in einer ein- oder mehrstufigen Schubzentrifuge, Doppelschubzentrifuge oder in einer Schwingzentrifuge vorteilhaft verwendet werden.

## Patentansprüche

1. Zentrifugentrommel (1), für eine Zentrifuge zur Trennung eines Gemischs in einen Feststoffkuchen und in eine Flüssigphase, umfassend einen die Zentrifugentrommel (1) bildenden Trommeldeckel (2), einen Trommelboden und einen Trommelmantel (3), wobei sich der Trommelmantel (3) entlang einer Längsachse (4) der Zentrifugentrommel (1) erstreckt und am Trommelmantel (3) in radialer Richtung zur Längsachse (4) eine Mehrzahl von Ablaufbohrungen (31) mit einem Ablaufdurchmesser angeordnet sind, und der Trommeldeckel (2) und der Trommelboden senkrecht zur Längsachse (4) diametral gegenüberliegend am Trommelmantel (3) angeordnet sind, und der Trommeldeckel (2), der Trommelboden und der Trommelmantel (3) gemeinsam einen Innenraum (11) der Zentrifugentrommel (1) einschliessen, welche Zentrifugentrommel (1) im Einbauzustand in der Zentrifuge drehbar um die Längsachse (4) angeordnet ist, im Betriebszustand mittels eines Antriebs mit einer vorgebbaren Drehzahl um die Längsachse (4) rotierbar ist, und an einer inneren Umfangsfläche (5) des Trommelmantels (3) ein Filtermedium (6) vorgesehen ist, wobei das Filtermedium (6) durch zumindest eine Fixiereinrichtung (12) an der inneren Umfangsfläche (5) des Trommelmantels (3) fixiert ist, und dass die Fixiereinrichtung (12) einen sich entlang einer Zapfenachse (13) erstreckenden Fixierzapfen (14) mit einem Fixierkragen (15) umfasst, **dadurch gekennzeichnet, dass** der Fixierzapfen (14) derart vom Innenraum (11) der Zentrifugentrommel (1) in einer der Ablaufbohrungen (31) angeordnet ist, so dass das Filtermedium (6) durch den Fixierkragen (15) an der inneren Umfangsfläche (5) des Trommelmantels (3) in radialer Richtung zur Längsachse (4) fixiert ist.

2. Zentrifugentrommel nach Anspruch 1, wobei das Filtermedium (6) ein Filtertuch und/oder ein Stützgewebe ist.

3. Zentrifugentrommel nach Anspruch 1 oder 2, wobei ein erster äusserer Zapfendurchmesser (201) des Fixierzapfens (14) grösser als der Ablaufdurchmesser der Ablaufbohrungen (31) ist.

4. Zentrifugentrommel nach einem der Ansprüche 1 bis 3, wobei der erste und/oder ein zweiter äusserer Zapfendurchmesser (201, 202) des Fixierzapfens (14) kleiner als der Ablaufdurchmesser der Ablaufbohrungen (31) ist.

5. Zentrifugentrommel nach einem der Ansprüche 1 bis 4, wobei der Fixierzapfen (14) entlang der Zapfenachse (13) über zumindest einen Teil seiner Länge eine Zapfenbohrung (19), insbesondere eine Zapfendurchgangsbohrung, aufweist.

6. Zentrifugentrommel nach Anspruch 5, wobei der Fixierzapfen (14) quer zur Zapfenbohrung (19) eine Zapfennut (21) aufweist.

7. Zentrifugentrommel nach Anspruch 6, wobei die Zapfennut (21) parallel zur Längsachse (4) der Zentrifugentrommel (1) ausgerichtet ist.

8. Zentrifugentrommel nach einem der Ansprüche 5 bis 7, wobei die Fixiereinrichtung (12) zusätzlich zum Fixierzapfen (14) einen Klemmbolzen (16) umfasst, und der Klemmbolzen (16) in der Zapfenbohrung (19) angeordnet ist.

9. Zentrifugentrommel nach Anspruch 8, wobei der Klemmbolzen (16) als eine Fixierschraube (161) ausgebildet ist und die Zapfenbohrung (19) ein Zapfengewinde aufweist, über welches die Fixierschraube (161) mit dem Fixierzapfen (14) verschraubt ist.

10. Zentrifugentrommel nach Anspruch 4, wobei in einer der Ablaufbohrungen (31) zumindest ein Verriegelungselement (25) vorgesehen ist, welches mit einem in radialer Richtung zur Zapfenachse (13) flexibel ausweichbaren Teilabschnitt (26) versehen ist und der Fixierzapfen (14) an einer äusseren Umfangsfläche eine Vertiefung (27), insbesondere eine umlaufende Vertiefung, aufweist, wobei der flexibel ausweichbare Teilabschnitt (26) in Betriebsstellung in die Vertiefung (27) des Fixierzapfens (14) hineinragt und den Fixierzapfen (14) in Richtung der Zapfenachse (13) sichert.

11. Zentrifugentrommel nach einem der Ansprüche 1 bis 10, wobei der Fixierkragen (15) rund ausgebildet ist.

12. Zentrifugentrommel nach einem der Ansprüche 1 bis 10, wobei der Fixierkragen (15) n-eckig ausgebildet ist.

13. Zentrifugentrommel nach einem der Ansprüche 1 bis 12, wobei das Filtermedium (6) ein Filtertuch und/ oder ein Stützgewebe, bevorzugt ein Textilfiltertuch und/ oder ein Textilstützgewebe, insbesondere ein Filtertuch und/ oder ein Stützgewebe aus Kunststoff, im Speziellen ein Filtertuch und/ oder ein Stützgewebe aus Polypropylen ist, und/oder ein Filtertuch und/ oder ein Stützgewebe aus Metall, und/ oder ein Filtertuch und/ oder ein Stützgewebe aus einem Verbundwerkstoff, im Speziellen aus einem Carbon Verbundwerkstoff und/ oder ein Filtertuch und/ oder ein Stützgewebe aus einem anderen geeigneten Werkstoff ist.

14. Zentrifuge, insbesondere vertikal oder horizontal gelagerte Zentrifuge, kontinuierlich oder diskontinuierlich arbeitende Zentrifuge, im Speziellen Schälzentrifuge, Gleitzentrifuge, ein- oder mehrstufige Schubzentrifuge, Doppelschubzentrifuge oder Schwingzentrifuge mit einer Zentrifugentrommel (1) nach einem der vorangehenden Ansprüche.

## Claims

1. A centrifuge drum (1) for a centrifuge for dividing a mixture into a solid material cake and a liquid phase, comprising a drum lid (2), a drum base and a drum jacket (3) forming the centrifuge drum (1) whereby the drum jacket (3) extends along a longitudinal axis (4) of the centrifuge drum (1), and whereby at the drum jacket (3) a number of discharge holes (31) are arranged in radial direction to the longitudinal axis (4) with a discharge diameter, and the drum lid (2) and the drum base are arranged perpendicularly to the longitudinal axis (4) diametrically opposite the drum jacket (3), and the drum lid (2), the drum base and the drum jacket (3) together enclose an inner space (11) of the centrifuge drum (1), which centrifuge drum (1) in the installed state is rotatable in the centrifuge around the longitudinal axis (4), and in the operating state is rotatable around the longitudinal axis (4) by means of a drive with an predeterminable rotational speed, and at an inner peripheral surface (5) of the drum jacket (3), a filter medium (6) is provided, whereby the filter medium (6) is fixed by at least one fixing arrangement (12) to the inner peripheral surface (5) of the drum jacket (3), and that the fixing arrangement (12) comprises a fixing socket (14) extending along a socket axis (13), with a fixing collar (15), **characterized in that** the fixing socket (14) is arranged from the inner space (11) of the centrifuge drum (1) in one of the discharge holes (31) such that the filter medium (6) is fixed by the fixing collar (15) to the inner peripheral surface (5) of drum jacket (3) in radial direction to longitudinal axis (4).

2. The centrifuge drum according to Claim 1, where the filter medium (6) is a filter cloth and/or a support fabric.

3. The centrifuge drum according to Claim 1 or 2, where a first outer socket diameter (201) of the fixing socket (14) is larger than the drainage diameter of the discharge holes (31).

4. The centrifuge drum according to one of Claims 1 to 3, where the first and/or a second outer socket diameter (201, 202) of the fixing socket (14) is smaller than the discharge diameter of the discharge holes (31).

5. The centrifuge drum according to one of Claims 1 to 4, where the fixing socket (14) over at least some of its length is provided with a socket hole (19) along the socket axis (13), in particular a socket passage hole.

6. The centrifuge drum according to Claim 5, where the fixing socket (14) is provided with a socket groove (21) transverse to the socket hole (19).

7. The centrifuge drum according to Claim 6, where the socket groove (21) is aligned parallel to the longitudinal axis (4) of the centrifuge drum (1).

8. The centrifuge drum according to one of Claims 5 to 7, where the fixing arrangement (12), in addition to having the fixing socket (14), is provided with a clamping bolt (16), and that the clamping bolt (16) is arranged in the socket hole (19).

9. The centrifuge drum according to Claim 8, where the clamping bolt (16) is designed as a fixing screw (161) and that the socket hole (19) is provided with a socket thread via which the fixing screw (161) is screwed to the fixing socket (14).

10. The centrifuge drum according to Claim 4, where in one of the discharge holes (31) at least one locking element (25) is provided which in a radial direction to the socket axis (13) has a flexibly deflectable partial section (26), and that the fixing socket (14) has a recess (27) at an outer peripheral surface, in particular a circumferential recess, whereby in operating position, the flexibly deflectable partial section (26) extends into the recess (27) of the fixing socket (14) and secures the fixing socket (14) in direction of the socket axis (13).

11. The centrifuge drum according to one of Claims 1 to 10, where the fixing collar (15) has a round shape.

12. The centrifuge drum according to one of Claims 1 to 10, where the fixing collar (15) is an n-gon.

13. The centrifuge drum according to one of Claims 1 to 12, where the filter medium (6) is a filter cloth and/or a support fabric, preferably a textile filter cloth and/or a textile support fabric, in particular a filter cloth and/or a support fabric of plastic, especially a filter cloth and/or support fabric of polypropylene, and/or a filter cloth and/or a support fabric of metal, and/or a filter cloth and/or a support fabric of a composite material, especially of a carbon composite material, and/or a filter cloth and/or a support fabric made of another suitable material.

14. A centrifuge, in particular a vertically or horizontally oriented centrifuge, a continually or discontinually operating centrifuge, especially a peeler centrifuge, sliding discharge centrifuge, one-stage or multi-stage pusher centrifuge, double pusher centrifuge or oscillating centrifuge with a centrifuge drum (1) according to one of the preceding Claims.

## Revendications

1. Un tambour de centrifugation (1), pour une centrifugeuse destinée à séparer un mélange en un gâteau de solides et une phase liquide, comprenant un couvercle de tambour (2) formant le tambour de centrifugation (1), un fond de tambour et une enveloppe de tambour (3), dans lequel l'enveloppe de tambour (3) s'étend le long d'un axe longitudinal (4) du tambour de centrifugation (1) et une pluralité d'alésages de décharge (31) ayant un diamètre de décharge sont disposés sur l'enveloppe de tambour (3) dans le sens radial par rapport à l'axe longitudinal (4), et le couvercle de tambour (2) et le fond de tambour sont disposés diamétralement opposés et perpendiculaires à l'axe longitudinal (4) sur l'enveloppe de tambour (3), et le couvercle du tambour (2), le fond du tambour et l'enveloppe du tambour (3) entourent ensemble un espace intérieur (11) du tambour de centrifugation (1), lequel tambour de centrifugation (1), à l'état monté, est disposé dans la centrifugeuse de manière à pouvoir tourner autour de l'axe longitudinal (4), et, à l'état de fonctionnement, peut tourner autour de l'axe longitudinal (4) au moyen d'un entraînement avec une vitesse de rotation prédéfinissable, et un médium filtrant (6) est prévu sur une surface circonférentielle intérieure (5) de l'enveloppe de tambour (3), dans lequel le médium filtrant (6) est fixé par au moins un dispositif de fixation (12) à la surface circonférentielle intérieure (5) de l'enveloppe de tambour (3), et que le dispositif de fixation (12) comprend un bouchon de fixation (14) s'étendant le long d'un axe de bouchon (13) avec un collier de fixation (15), **caractérisé en ce que** le bouchon de fixation (14) est disposé depuis l'espace intérieur (11) du tambour de centrifugation (1) dans l'un des alésages de décharge (31) de telle sorte, que le médium filtrant (6) est fixé par le collier de fixation (15) sur la surface circonférentielle intérieure (5) de l'enveloppe du tambour (3) dans la direction radiale par rapport à l'axe longitudinal (4).

2. Un tambour de centrifugation selon la revendication 1, dans lequel le médium filtrant (6) est une toile filtrante et / ou un tissu de support.

3. Un tambour de centrifugation selon la revendication 1 ou 2, dans lequel un premier diamètre de bouchon extérieur (201) du bouchon de fixation (14) est plus grand que le diamètre de décharge des alésages de décharge (31).

4. Un tambour de centrifugation selon l'une des revendications 1 à 3, dans lequel le premier et / ou un deuxième diamètre de bouchon extérieur (201, 202) du bouchon de fixation (14) est plus petit que le diamètre de décharge des alésages de décharge (31).

5. Un tambour de centrifugation selon l'une des revendications 1 à 4, dans lequel le bouchon de fixation (14) a un alésage de bouchon (19), en particulier un alésage traversant de bouchon, sur au moins une partie de sa longueur le long de l'axe de bouchon (13).

6. Un tambour de centrifugation selon la revendication 5, dans lequel le bouchon de fixation (14) a une rainure de bouchon (21) transversale à l'alésage de bouchon (19).

7. Un tambour de centrifugation selon la revendication 6, dans lequel la rainure de bouchon (21) est alignée parallèlement à l'axe longitudinal (4) du tambour de centrifugation (1).

8. Un tambour de centrifugation selon l'une des revendications 5 à 7, dans lequel le dispositif de fixation (12) comprend un boulon de serrage (16) en plus du bouchon de fixation (14), et le boulon de serrage (16) est disposé dans l'alésage de bouchon (19).

9. Un tambour de centrifugation selon la revendication 8, dans lequel le boulon de serrage (16) est conçu sous la forme d'une vis de fixation (161) et l'alésage de bouchon (19) a un filetage de bouchon par lequel la vis de fixation (161) est vissée sur le bouchon de fixation (14).

10. Un tambour de centrifugation selon la revendication 4, dans lequel au moins un élément de verrouillage (25) est prévu dans l'un des alésages de décharge (31), ledit élément de verrouillage (25) est pourvu d'une section partielle (26) évitable de manière flexible dans la direction radiale par rapport à l'axe du bouchon (13) et le bouchon de fixation (14) a une dépression (27), en particulier une dépression périphérique, sur une surface circonférentielle extérieure, dans lequel la section partielle (26) évitable de manière flexible, en position de fonctionnement, fait saillie dans la dépression (27) du bouchon de fixation (14) et fixe le bouchon de fixation (14) dans la direction de l'axe de bouchon (13).

11. Un tambour de centrifugation selon l'une des revendications 1 à 10, dans lequel le collier de fixation (15) est rond.

12. Un tambour de centrifugation selon l'une des revendications 1 à 10, dans lequel le collier de fixation (15) est conçue n-angulaire.

13. Un tambour de centrifugation selon l'une des revendications 1 à 12, dans lequel le médium filtrant (6) est une toile filtrante et / ou un tissu de support, de préférence une toile filtrante textile et / ou un tissu de support textile, en particulier une toile filtrante et / ou un tissu de support en matière synthétique, en particulier une toile filtrante et / ou un tissu de support en polypropylène, et / ou une toile filtrante et / ou un tissu de support métallique, et / ou une toile filtrante et / ou un tissu de support en matériau composite, en particulier d'un matériau composite en carbone et / ou une toile filtrante et / ou un tissu de support en un autre matériau approprié.

14. Une centrifugeuse, en particulier une centrifugeuse montée verticalement ou horizontalement, une centrifugeuse à fonctionnement continu ou discontinu, en particulier une centrifugeuse à racloir, une centrifugeuse glissante, une centrifugeuse à poussoir à un ou plusieurs étages, une centrifugeuse à poussoir double ou une centrifugeuse vibrante avec un tambour de centrifugation (1) selon l'une des revendications précédentes.
